# EUROPEAN PATENT SPECIFICATION

(11) **EP 2 785 800 B1**
(45) Date of publication and mention of the grant of the patent: **04.01.2017**
(21) Application number: 12791203.8
(22) Date of filing: 28.11.2012
(51) Int. Cl.: C09D 5/00

(54) **MARKED COATING COMPOSITION AND METHOD FOR ITS AUTHENTICATION**
MARKIERTE BESCHICHTUNGSZUSAMMENSETZUNG UND AUTHENTIFIZIERUNGSVERFAHREN DAFÜR
COMPOSITION DE REVÊTEMENT PROTECTEUR ET SON PROCÉDÉ D'AUTHENTIFICATION

(30) Priority: 30.11.2011 EP 11009457
(43) Date of publication of application: 08.10.2014
(73) Proprietor: Sicpa Holding SA, 1008 Prilly (CH)
(72) Inventor: NOUZILLE, Eric, CH-1315 La Sarraz (CH); DEMANGE, Raynald, CH-1442 Montagny-près-Yverdon (CH); DEGOTT, Pierre, CH-1023 Crissier (CH)
(74) Representative: Hoffmann Eitle
(86) International application number: PCT/EP2012/073820
(87) International publication number: WO 2013/079521

(56) References cited:
- WO-A1-2008/037635
- DE-A1-102006 027 533

## Description

### Field of the Invention

The present invention relates to the field of authentication of coating compositions such as varnishes, inks and paints, and it is particularly useful in the field of authentication of such coating compositions when applied to substrates like banknotes or other valuable documents. It is particularly directed to a marked coating composition, e.g. an ink, that is marked with a marker (taggant) such as to allow for its authentication, and a method for authenticating such a marked coating composition.

### Background of the Invention

The authentication of products, i.e. the identification and/or verification of their origin, plays a critical role in a whole range of different industries and applications. It is known in the art to add so-called taggants, i.e. authenticable chemical components like specific markers, to products in order to allow for their identification and authentication.

Marking of polymers for identification purposes, for example, is known in the art. Marked PVC for the identification by UV devices has been described by M. Hidalgo et al., Journal of Vinyl Technology, Vol. 16, (1994), p. 162-168. Therein, a UV-absorbing marker moiety is grafted onto the polymer chain to prevent its loss during the further processing of the polymer during the manufacturing of the PVC.

In WO 2005/055236, which is directed to protecting a data storage medium, T. Evans et al. disclose a method of authenticating a tagged polymer comprising a substrate polymer such as polycarbonate, a compound comprising a forensic authentication marker, and a dynamic response authentication marker. The dynamic response authentication marker is a luminescent or thermochromic compound, and the forensic authentication marker is an organic or inorganic functional group or structure, which is not originally present in the chemical structure of the substrate polymer, and which is present in an amount detectable by a forensic analytical technique. Contemplated forensic analytical techniques are luminescence spectroscopic methods and resonance spectroscopy methods, such as NMR, ESR, XPS-ESCA, SEM-EDX, atomic absorption and the like wherein usually NMR markers and NMR analytical techniques are preferred.

The technology disclosed in WO 2005/055236 does, however, neither address the specific needs of nor rely on the analytical instrumentation used in coating chemistry. WO 2005/055236 is also silent with respect to any detailed process for authenticating articles marked with the tagged polymers.

Also the authentication of coating compositions, such as inks, varnishes and paints, plays a critical role in a whole range of different situations. Particularly, banknotes, or other documents of value such as passports and the like, usually comprise a substrate on which one or more different coating compositions, e.g. inks, are applied, e.g. by printing, at least some of which are typically not available in the open market and may even be provided only by a single manufacturer. Thus, by analyzing the ink, its origin and often also that of the substrate, e.g. the banknote, can be authenticated, e.g. for forensic purposes. Further, such authenticable coating compositions can be used to protect all kinds of goods against counterfeiting, by applying such a coating composition to the goods, e.g. textiles, fashion articles, spare parts, electronic products and almost any other product category that is subject to or in danger of counterfeiting or unauthorized copying (e.g. documents or data storage media).

The use of Laser Desorption Mass Spectrometry (LDMS), was reported by Balko and Allison in Journal of Forensic Science Vol 48 (5) (2003) p. 1-7, for the detection of staining inks used for the security of banknotes or value documents. The staining inks may be identified by LDMS through detection of their dye components. Nevertheless, the LDMS method does not permit distinguishing between a grafted taggant and a non-grafted extractable taggant and thus to unequivocally identify marked inks, marked varnish or specific batch.

For analyzing a given material it is known in the art to use pyrolysis (PY) gas chromatography (GC) coupled to mass spectrometry (MS), sometimes referred to as "PY-GC-MS", as a non-invasive technology for the forensic analysis of various types of material such as paints or inks, in particular inkjet inks (e.g. Partouche et al. in Final Program& Proceedings of the 21st Conference on Digital Printing Technology (2005) p. 216) or toners (e.g. Levy et al. in Journal of Forensic Sciences Volume 31(1) (1986) p.258-71).

Furthermore, in a number of applications for marked coating compositions there currently exists the problem that the reliability of authentication and the protection of the markings themselves as well as of the products marked therewith against copying, counterfeiting or removal of the markings is not always sufficient in view of the more and more sophisticated methods applied by those against which the markings are intended to provide protection. Particularly, chemical attacks applied either specifically to identified markings or to the marked products in part or as a whole are sometimes used to effectively remove, e.g. by extraction, the taggant used for the marking.

Accordingly there is a need for providing improved marked coating compositions, e.g. marked (security) inks, which overcome the above problems, and a method for effectively identifying same and tracing their origin, including for forensic purposes. There is in particular a need for such a coating composition and a corresponding authentication method, which are suitable for the effective marking and thus protection of substrates of all kinds, particularly including banknotes and other value documents, and the definite authentication of marked coating compositions, e.g. marked inks, when applied to such substrates.

### Summary of the Invention

Firstly, the present invention provides a composition (1), which is a marked coating composition comprising
(i) a marked non-extractable component (5) comprising an oligomeric or polymeric moiety (2a) and at least one marker moiety (3a) bonded to the moiety (2a) via a covalent linking group (4); or
(ii) an oligomeric or polymeric component (2) and at least one marker (3) comprising a marker moiety (3a) and a group capable of forming a linking group (4) to obtain the component (5) upon curing the composition (1);
wherein the amount of the marker moiety (3a), based on the composition (1), is 0.001-1 wt.-%, and
wherein the moiety derived from the marker (3) and comprising the marker moiety (3a) and the covalent linking group (4) is selected from

R-(CRH)*ₘ*-(CR=CH*ₙ*)-(C=C)*ₚ-*R (I)

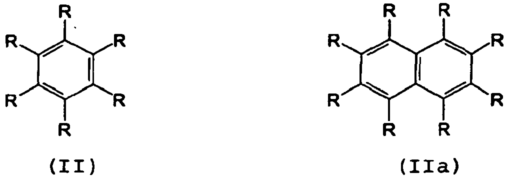

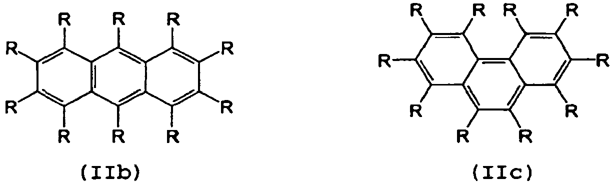

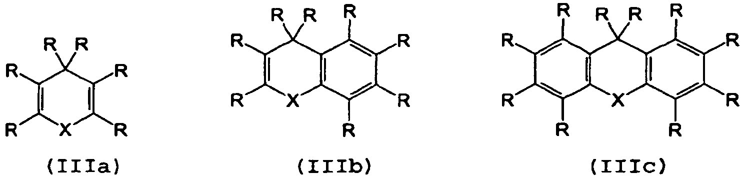

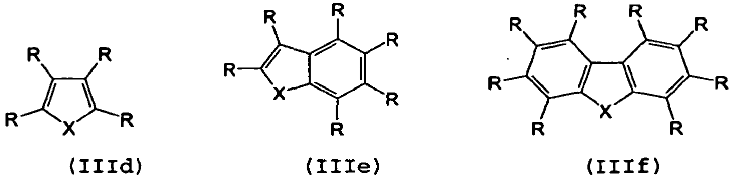

wherein
- R: each independently is selected from H, D (deuterium), T (tritium), C₁₋₁₈-alkyl, C₁₋₁₈-alkenyl, C₁₋₁₈-alkynyl, C₃₋₁₂-cycloalkyl, C₃₋₁₂-cycloalkenyl, C₁₋₁₂-heterocycloalkyl, C₇₋₁₂-aralkyl, *Hal*, CH₂*Hal,* CH*Hal*₂, *CHal*₃, CN, CXXR², OR², SR², NR²R³, -N=N-Ar, =N-NR²Ar, SiR⁴R⁵R⁶, X-P(X)(XR²)(XR³), P(X)(XR²)(XR³), SOR², SO₂R², phenyl substituted with 1-3 groups R² different from H, or a 5-8-membered heteroaromatic group having at least on of O, S, N, NH and N(C₁₋₁₈-alkyl) in the ring;
or two adjacent groups R separated by 2 or 3 carbon atoms together form a moiety selected from

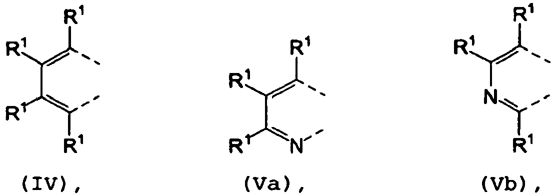

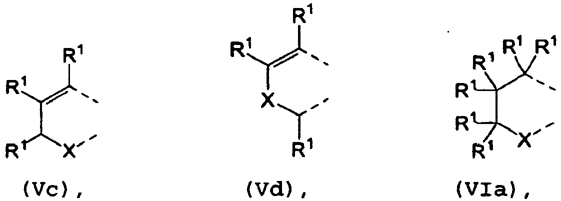

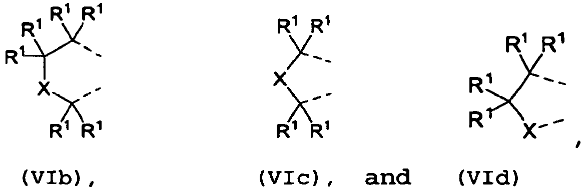

- R¹: each independently is selected from H, D (deuterium), T (tritium), C₁₋₁₈-alkyl, *Hal,* CH₂*Hal*, CH*Hal*₂, *CHal*₃, CN, CXXR², OR², SR², NR²R³, SiR⁴R⁵R⁶, P(X)(XR²)(XR³), X-P(X)(XR²)(XR³), SOR² and SO₂R²; or in formulae (VIa)-(VId) two geminal groups R¹, together with the carbon atom to which they are bound, each independently are C=O, C=NR² or C=S;
- R², R³: each independently is selected from H, D (deuterium), C₁₋₁₈-alkyl, C₁₋₁₈-alkenyl, C₁₋₁₈-alkynyl, C₃₋₁₂-cycloalkyl, C₃₋₁₂-cycloalkenyl, C₁₋₁₂-heterocycloalkyl, C₇₋₁₂-aralkyl, CH₂*Hal*, CH*Hal*₂, C*Hal*₃, SiR⁴R⁵R⁶, phenyl and a 5-8-membered heteroaromatic group having at least on of O, S, N, NH and N(C₁₋₁₈-alkyl) in the ring;
- R⁴, R⁵ and R⁶: each independently are selected from C₁₋₁₈-alkyl, O(C₁₋₁₈-alkyl) and N(C₁₋₁₈-alkyl);

- *Hal*: is F, Cl, Br or I;
- Ar: is an aromatic group;
- X: is O, NH, N(C₁₋₁₈-alkyl) or S; and
- *m, n, p*: each are a number in the range of 0-20; and

(i) at least one, preferably one to four, and more preferably one or two, group(s) R is/are a covalent linking group (4) linking the marker moiety (3a) to the oligomeric or polymeric moiety (2a), and each independently is selected from a bond, (*3a*)-COO-(*2a*), *(3a)*-CONR²-(*2a*), *(3a)*-O-CO-O-*(2a), (3a)*-O-CO-NR²*-(2a), (3a)*-NH-CO-NR²-*(2a)*, *(3a)*-O-*(2a), (3a)*-S-*(2a)* or *(3a)-*NR²-(2a), wherein (3a) and (2a) indicate the positions of the marker moiety (3a) and the oligomeric or polymeric moiety (2a), respectively; and
(ii) at least one R or R² which is not a covalent linking group (4) is not H; and
   wherein the marked coating composition (1) is selected from
   - an oxidatively drying composition comprising
      an oligomer or a polymer comprising unsaturated fatty acid residues, saturated fatty acids residues or mixtures thereof; or
      a resin selected from alkyd resins, vinyl polymers, polyurethane resins, hyperbranched resins, rosin-modified maleic resins, terpene resins nitrocellulose resins, polyolefins, polyamides, acrylic resins and mixtures thereof;
   - a thermal drying composition comprising a resins selected from polyester resins, polyether resins, vinyl chloride polymers and vinyl chloride based copolymers, nitrocellulose resins, cellulose acetobutyrate or acetopropionate resins, maleic resins, polyamides, polyolefins, polyurethane resins, functionalized polyurethane resins, polyurethane alkyd resins, polyurethane-(meth)acrylate resins, urethane-(meth)acrylic resins, styrene (meth)acrylate resins and mixtures thereof;
   - a W-VIS-curable composition comprising one or more compounds selected from oligomeric (meth)acrylates, vinyl ethers, propenyl ethers, cyclic ethers, oxetanes, tetrahydrofuranes, lactones, cyclic thioethers, vinyl and propenyl thioethers, hydroxyl-containing compounds and mixtures thereof; and
   - a combination thereof.

Thus, the marker moieties (3a) are covalently bound to the coating composition component and cannot be easily removed or extracted, e.g. by common chemical treatments, e.g. using solvents or other easily available chemical extraction means. Thus, the effectiveness of the protection provided by markings based on such marked coatings is substantially improved.

Secondly, the invention provides an article, comprising a substrate to which a composition (1) of the invention and comprising the marked non-extractable component (5) is applied, and further provides a method for its manufacture, which method comprises applying the composition (1) on a substrate by a printing method, selected from offset, flexographic, gravure, intaglio, inkjet, letterpress, screen printing and combinations thereof, or by a method selected from brushing, roll-coating, spin coating, knife coating, casting, pouring, spraying and combinations thereof.

Particularly, such substrate may be a banknote or another value document, e.g. including without limitation passports, deeds and certificates, on which the marked coating composition is printed. Further, the substrate may for example also be a textile, cloth, leather etc. of some sort, thus allowing for the effective marking of fashion articles. The marked coating composition of the present invention may also be applied to other products, e.g. consumer products such as electronic devices, for the purpose of marking same, wherein some part or all of such a product serves as a substrate. Thus, the security of such substrates, e.g. documents, against copying, counterfeiting and/or the removal of a marking (taggant) and the safe identification of their origin and discrimination from counterfeited similar substrates (e.g. documents) can be substantially increased.

Thirdly, the invention provides a method of authenticating a composition (1) of the invention present in the article of the invention as defined above, comprising the steps of
(S100) collecting a sample of the composition (1) from the substrate to obtain a collected sample;
(S200) submitting the collected sample to thermally induced chemical fragmentation conditions to obtain chemical fragmentation products derived from the unit formed of the at least one marker moiety (3a) and the covalent linking group (4) covalently bonded to the oligomeric or polymeric moiety (2a);
(S300) analyzing the chemical products of the chemical sample fragmentation; and
(S400) authenticating the composition (1) by comparing these chemical products to one or more reference substances.

This method allows for the effective and efficient authentication of marked coating compositions according to the first aspect, when they are applied to a substrate, such as a banknote, essentially without the need to damage or destroy the substrate, as the physical collection of minimal volumes of the marked coating composition applied to the substrate, e.g. by means of a scalpel, is sufficient and no chemical treatment of the substrate is necessary, while the latter is typical of known taggant extraction and authentication methods. Further, these known methods are not even suitable for the authentication of the marked coating composition according to the first aspect, as its taggants are not extractable by such common chemical treatments used by these known methods.

Further improvements and specific embodiments of the present composition, article and methods of the present invention are set forth in the following detailed description and/or in the appended dependent claims.

### Brief Description of the Figures

In the following the invention will be described in detail in connection with preferred embodiments and with reference to the accompanying drawings and diagrams, in which
**Figure 1** illustrates in an abstract manner the components of a coating composition according to a preferred embodiment of the present invention;
**Figure 2** shows a flow diagram for the method of authenticating a marked coating composition being applied to a substrate, according to a preferred embodiment of the present invention;
**Figure 3** shows exemplary results in the form of a GC-chromatogram and the MS spectrum of a taggant as such, i.e. the reference substance according to step S400 of Figure 2, namely FPA (see example).
**Figure 4** shows exemplary results provided by the method of the present invention in the form of a GC-chromatogram of an untagged ink (chromatogram on the top) and a GC-chromatogram of a ink tagged with the taggant FPA (see example).
Figure 5 shows exemplary results in the form of the GC-chromatogram of a ink tagged with the taggant FPA (same GC-chromatogram as in Figure 4 bottom) and the MS-spectrum of the substance appearing at 12.210 in the GC-chromatogram.

### Detailed Description

In the following, various embodiments of the present invention are described, wherein exemplarily the coating composition is selected to be an ink. However, this is by no means intended to limit the disclosure of these embodiments solely to inks or the authentication thereof. Rather, also any other marked coating composition according to the first aspect can be used instead and without limitation, including for all embodiments described below.

In the present invention, the marker (3) refers to a molecule comprising two different chemical functionalities within the same molecule: a first chemical functionality is selected such as to react with an oligomeric or polymeric component (2) used in a coating composition, e.g. an oligomeric or polymeric ink component, to form a covalent linking group (4) covalently bonding the marker and the oligomeric or polymeric (ink) component. The second functionality is selected such as to provide a marker moiety (3a) as a unique and identifiable trace, e.g. upon forensic analysis, in particular upon analysis by mass spectrometry.

The marker (3) thus includes this second functionality, i.e. a *marker moiety* (3a), and the first functionality for covalently binding the marker via the covalent linking group (4) to the coating composition component (2) thus forming the marked coating composition component (5) comprising an oligomeric or polymeric moiety (2a), a covalent linking group (4) and a marker moiety (3a).

The *marker moiety (3a)* and *oligomeric or polymeric moiety (2a)* thus refer to the covalently bound molecules of the marker (3) and the *oligomeric or polymeric component (2)*, respectively.

As used herein, the terms *oligomer* or *oligomeric* and the terms *polymer* or *polymeric* designate compounds of medium or high molecular mass consisting of repeating units, as generally known in the art and defined e.g. in Pure and Applied Chemistry (1996) 68, 2287-2311. According to the present invention, a marked oligomer has a molecular mass of below 1000 g/mol, and the marked polymer has a molecular mass of at least 1000 g/mol.

Preferably, the marked oligomer has a molecular mass of below 1000 g/mol and at least 3, preferably at least 4 repeating units.

Preferably, the marked polymer has a weight-based average molecular weight (Mw)of at least 5,000 g/mol (5 kDa), e.g. at least 10,000 g/mol (10 kDa), at least 15,000 g/mol (15 kDa), or at least 20,000 g/mol (20 kDa). The Mw usually is not higher than 5,000 kDa, preferably 2,000 kDa, and more preferably 1,000 kDa. Especially for ink binders an upper limit of 2,000 kDa is preferred, and more preferred is 1,000 kDa or less.

The weight-based average molecular weight can be determined from the molecular weight distribution (MWD). The MWD is determined by gel permeation chromatography (GPC) using a Malvern Instrument (Viscotek GPC-Max with triple detection array, Model TDA 302, comprising a refractometer, a viscosimeter and light scattering). The MWD is calculated by universal calibration (refractometer and viscosimeter) using narrow polystyrene standards (750-1,000 kDa, Mw/Mn in the range of 1.1-1.2).

The columns used are two mixed bed columns from TSK-GEL (GMHHR-M, 300 mm x 7.8 mm, max. 1,000 kDa and GMHHR-H, 300 mm x 7.8 mm, max. 5,000 kDa).

The marker is a specific organic structure whose specific second functionality is typically not comprised in any ink component or any substrate component. For instance, the marker may be derived from a substituted phthalic anhydride, e.g. mono- or poly-halogeno phthalic anhydride, the marker second functionality being e.g. in the case the specific halogen substituted aromatic ring. Thus, for instance, the marked ink component may consist in a mono-ester or a di-ester of 4,5-dichloro-1,2-benzenedicarboxylic acid, or a mono-ester or a di-ester of 4-fluroro-1,2-benzenedicarboxylic acid, that may be obtained by reacting the corresponding halogenated phthalic anhydride with an oligomeric or polymeric polyol.

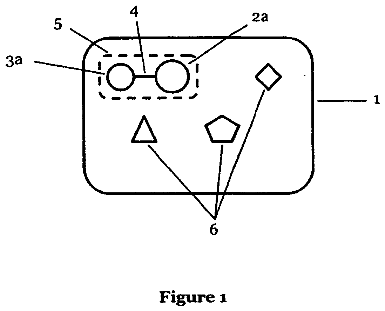

Figure 1 illustrates in an abstract manner the components of a marked coating composition (1), e.g. of a marked ink, according to a preferred embodiment of the present invention. The marked coating composition comprises as a coating composition component moiety (2) an oligomeric or polymeric moiety (2a), which is bound to a marker moiety (3a) by a covalent bond (4), i.e. via a covalent linking group (4). Of course the skilled person will understand that for practical purposes the ink will typically comprise coating composition components, i.e. molecules, at least some of which have a marker moiety bound thereto, preferably at mass concentrations between 0.001% and 1%, rather than only a single pair of such bound molecules, and that the covalent bond (4) can indeed represent a single, a double or a triple bond; or alternatively the covalent bond (4) may represent a plurality of covalent bonds. In this case the marker (3) contains a plurality of first chemical functionalities able to react with one more oligomeric or polymeric ink component. The coating composition component (2) itself is an oligomeric or a polymeric coating composition component and the marked coating composition component (5) is a non-extractable compound.

The moiety derived from the marker (3) and comprising the marker moiety (3a) and the covalent linking group (4) is selected from the following:

R-(CRH)*ₘ-*(CR=CH)*ₙ-*(C=C)*ₚ-*R (I)

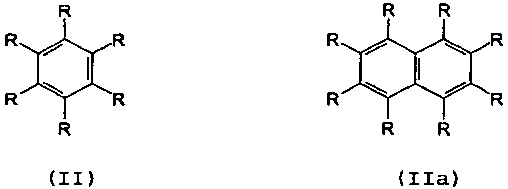

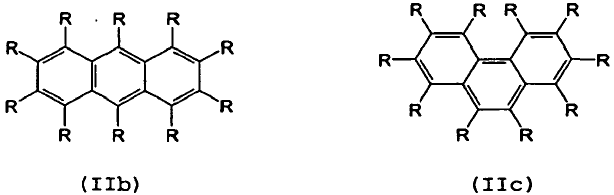

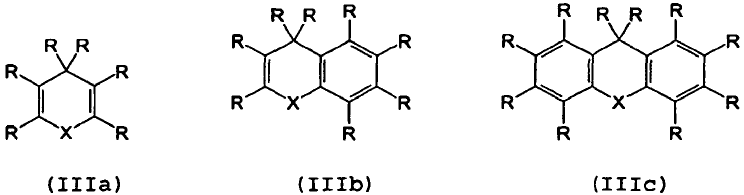

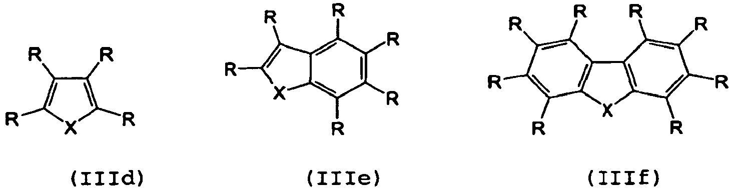

wherein
- R: each independently is selected from H, D (deuterium), T (tritium), C₁₋₁₈-alkyl, C₁₋₁₈-alkenyl, C₁₋₁₈-alkynyl, C₃₋₁₂-cycloalkyl, C₃₋₁₂-cycloalkenyl, C₁₋₁₂-heterocycloalkyl, C₇₋₁₂-aralkyl, *Hal,* CH₂*Hal,* CH*Hal*₂, C*Hal*₃, CN, CXXR², OR², SR², NR²R³, -N=N-Ar, =N-NR²Ar, SiR⁴R⁵R⁶, X-P(X)(XR²)(XR³), P(X)(XR²)(XR³), SOR², SO₂R², phenyl substituted with 1-3 groups R² different from H, or a 5-8-membered heteroaromatic group having at least one of O, S, N, NH and N(C₁₋₁₈-alkyl) in the ring;
or two adjacent groups R separated by 2 or 3 carbon atoms together form a moiety selected from 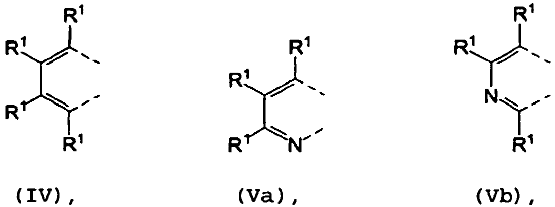 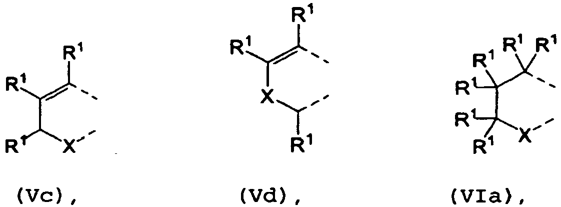 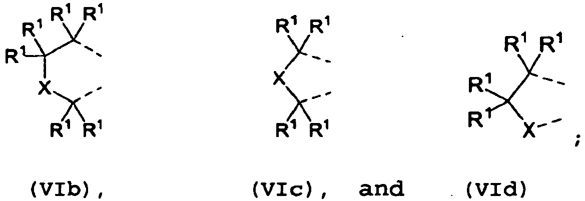
R¹ each independently is selected from H, D (deuterium), T (tritium), C₁₋₁₈-alkyl, *Hal*, CH₂*Hal*, CH*H*a*l₂*, *CHal₃,* CN, CXXR², OR², SR², NR²R³, SiR⁴R⁵R⁶, P(X)(XR²)(XR³), X-P(X)(XR²)(XR³), SOR² and SO₂R²;
or in formulae (VIa)-(VId) two geminal groups R¹, together with the carbon atom to which they are bound, each independently are C=O, C=NR² or C=S;
R², R³ each independently is selected from H, D (deuterium), C₁₋₁₈-alkyl, C₁₋₁₈-alkenyl, C₁₋₁₈-alkynyl, C₃₋₁₂-cycloalkyl, C₃₋₁₂-cycloalkenyl, C₁₋₁₂-heterocycloalkyl, C₇₋₁₂-aralkyl, CH₂*Hal*, CH*Hal*₂, C*Hal*₃, SiR⁴R⁵R⁶, phenyl and a 5-8-membered heteroaromatic group having at least one of O, S, N, NH and N(C₁₋₁₈-alkyl) in the ring;
R⁴, R⁵ and R⁶ each independently are selected from C₁₋₁₈-alkyl, O(C₁₋₁₈-alkyl) and N(C₁₋₁₈-alkyl);
*Hal* is F, Cl, Br or I;
Ar is an aromatic group;
X is O, NH, N(C₁₋₁₈-alkyl) or S; and
*m*, *n*, *p* each are a number in the range of 0-20; and
(i) at least one, preferably one to four, and more preferably one or two, group(s) R is/are a covalent linking group (4) linking the marker moiety (3a) to the oligomeric or polymeric moiety (2a) and each independently is selected from a bond, *(3a)*-COO-*(2a), (3a)-CONR²-(2a), (3a)*-O-CO-O-*(2a)*, *(3a)-*O*-*CO*-*NR²*-(2a)*, *(3a)*-NH-CO-NR²-*(2a)*, *(3a)*-O-*(2a), (3a)*-S-*(2a)* or *(3a)-*NR²-*(2a)*, wherein *(3a)* and *(2a)* indicate the positions of the marker moiety (3a) and the oligomeric or polymeric moiety (2a), respectively; and
(ii) at least one R or R² which is not a covalent linking group (4) is not H.

In the present context, a heterocycle is an aliphatic or an aromatic ring containing one or more, especially one or two heteroatoms, including particularly O, N or S.

More preferably, the moiety derived from the marker (3) is selected from the above formulae (I), (II), (IIa), (IIb) and (IIIa)-(IIIf), wherein
- R: each independently is selected from H, D (deuterium), T (tritium), C₁₋₁₈-alkyl, C₃₋₁₂-cycloalkyl, C₃₋₁₂-cycloalkenyl, C₁₋₁₂-heterocycloalkyl, *Hal,* CH*Hal*₂, C*Hal*₃, CXX-R², OR², SR², NR²R³, -N=N-Ar, =N-NR²Ar, SiR⁴R⁵R⁶, X-P(X)(XR²)(XR³), P(X)(XR²)(XR³), SOR² and SO₂R²; wherein R² is C₄₋₁₈-alkyl
or two adjacent groups R separated by 2 or 3 carbon atoms together form a moiety selected from the formulae [IV], [Va], [Vc], [VIa] or [VIc], wherein
R¹ each independently is selected from H, C₁₋₁₈-alkyl, *Hal,* CH₂*Hal*, CH*Hal*₂, C*Hal*₃, CXXR², OR², SR², NR²R³, SOR² and SO₂R²; wherein R² *is* C₄-₁₈-alkyl; and
in formula (VIa) two germinal groups R¹, together with the carbon atom to which they are bound, each independently can further be C=O, C=NR² or C=S; and
the covalent linking group (4) is selected from a bond, *(3a)*-COO*-(2a), (3a)*-CONR²-*(2a)*, *(3a)*-O*-*CO*-*NR²-*(2a)*, *(3a)*-NH-CO-NR²-*(2a)*, *(3a)-O-(2a), (3a)-S-(2a)* and *(3a)* -NR²-*(2a)*.

Still more preferably, the moiety derived from the marker (3) is selected from the above formulae (I), (II), (IIa), (IIIa) and (IIIb), wherein
- R: each independently is selected from H, D (deuterium), C₁₋₁₈-alkyl, C₃₋₁₂-cycloalkyl, C₁₋₁₂-heterocycloalkyl, *Hal,* CH*Hal₂,* C*Hal*₃, CXX-R², OR², SR², NR²R³, P(X)(XR²)(XR³), SOR² and SO₂R²; wherein R² is C₄₋₁₈-alkyl;
or two adjacent groups R separated by 2 or 3 carbon atoms together form a moiety selected from the formulae [IV], [Va], [Vc], [VIa] or [VIc], wherein
R¹ each independently is selected from H, C₁₋₁₈-alkyl, C*Hal*₃, CXXR², OR², SR², NR²R³, SOR² and SO₂R²; wherein R² is C₄₋₁₈-alkyl; and in formula (VIa) two germinal groups R¹, together with the carbon atom to which they are bound, each independently can further be C=O, C=NR² or C=S; and
the covalent linking group (4) is selected from a bond, *(3a)-COO-(2a), (3a)*-CONR²-*(2a)*, (*3a*)-O-CO-NR²-*(2a*), *(3a)*-NH-CO-NR²-*(2a)*, *(3a)*-O-*(2a), (3a)*-S-*(2a)* and (*3a*)-NR²-(*2a*).

Particularly, for tagging an oligomeric or polymeric component of an ink, e.g a binder, i.e. resin or varnish, used in printing inks, the marker (3) may be covalently attached to one of the oligomeric or polymeric ink components (2) during the synthesis of the ink component (2). Alternatively the marker (3) may be attached to the ink component (2) during the ink compounding, i.e. during the preparation of the marked coating composition (1). Or in a further alternative the marker (3) may be covalently attached to the ink components (2) during an ink drying (curing) process, e.g. after the ink has been applied to a substrate.

The marked coating composition (1) may also comprise one or more additional coating composition components (6) for adding further properties to the coating composition, particularly one or more (in any combination) of the following components: pigments, dyestuffs, luminescents compounds, oils, resins, solvents, reactive diluents, plasticizers, waxes, fillers, driers, anti-oxidants, surfactants, defoaming agents, catalysts, UV-stabilizers, and photoinitiators.

Preferably, for reasons described below in connection with the method of authenticating a marked coating composition according to the invention, the marker moiety (3a), covalently bound to the coating composition component moiety (2a), is present in the marked coating composition (1) at a mass concentration (based on the formulation of the marked coating composition (1)) between 0.001% and 1%, most preferably at a mass concentration between 0.01% and 0.1%.

Also more than one type of marker moiety (3a) may be used for the marking. For example, two or more different marker moieties (3a) may be present. For instance, two or more different markers (3, 3', 3"', ...) may be reacted with one oligomeric or polymeric component (2); or alternatively, two or more different markers (3, 3', 3", ...) may be reacted each with a different molecule of an oligomeric or polymeric component (2) ; or alternatively, two or more different markers (3, 3', 3",...) may be reacted with two ore more different oligomeric or polymeric components (2, 2', 2",..). The different markers (3) may vary by one or by both their above-defined functionalities: for instance the different markers may have the same first functionality that react with the ink component to form a covalent linking group (4), but different second functionality that gives the identifiable trace upon forensic analysis. Alternatively, the different markers (3) may have various first functionalities in order to provide different covalent linking groups (4) to the component (2) and a same second functionality that provides the identifiable trace upon forensic analysis. Further alternatively, the different markers (3) may have both different first and second functionalities. When two or more different markers (3) are used simultaneously to tag (i.e. mark) one ink, the molecular ratio of the different marker moieties (3a), preferably present in two or more different marked coating composition components (5), may be used as an additional (e.g. forensic) characteristic of the marked coating composition (1).

The marked coating composition (1) is an oxidatively drying composition, a thermal drying composition, a UV-VIS-curable composition or a combination thereof.

According to one embodiment, the marked coating composition (1) is an oxidatively drying coating composition, in particular a drying oil, i.e. a coating composition that cure under the action of oxygen, for instance oxygen from the air ("air-drying"). Alternatively, in order to accelerate the drying process, the drying process may be performed under hot air, infrared or combination of hot air and infrared.

The present marked coating composition (1) typically comprises an oligomer or a polymer comprising unsaturated fatty acid residues, saturated fatty acids residues or mixtures thereof. Preferably the coating composition (1) comprises unsaturated fatty acid residues to ensure the air drying properties. Particularly preferred are oligomers and/or polymers comprising unsaturated acid groups. Also preferably, the marked coating composition (1) may comprise a resin component selected from e.g. alkyd resins, vinyl polymers, polyurethane resins, hyperbranched resins, rosin-modified maleic resins, terpene resins nitrocellulose resins, polyolefins, polyamides, acrylic resins and mixtures thereof.

Saturated and unsaturated fatty acid compounds may be obtained from natural and/or artificial sources. Natural sources include animal sources and/or plant sources. Animal sources may comprise animal fat, butter fat, fish oil, lard, liver fats, tuna fish oil, sperm whale oil and/or tallow oil and waxes. Examples of waxes are beeswax, candela and/or montan. Plant sources may comprise waxes and/or oils such as vegetable oils and/or non-vegetable oils. Examples of plant oils are: bitter gourd, borage, calendula, canola, castor, china wood, coconut, conifer seed, corn, cottonseed, dehydrated castor, flaxseed, grape seed, *Jacaranda mimosifolia* seed, linseed oil, palm, palm kernel, peanut, pomegranate seed, rapeseed, safflower, snake gourd, soya (bean), sunflower, tung, and/or wheat germ. Artificial sources include synthetic waxes (such as micro crystalline and/or paraffin wax), distilling tail oil and/or chemical or biochemical synthesis methods. Suitable fatty acids also include (Z)-hexadan-9-enoic [palmitoleic] acid (C₁₆H₃₀O_{z}), (Z)-octadecan-9-enoic[oleic] acid (C₁₈H₃₄O₂), (9Z,11E,13E)-octadeca-9,11,13-trienoic[α-eleostearic]acid (C₁₈H₃₀O₂), licanic acid, (9Z,12Z)-octadeca-9,12-dienoic[linoeic] acid (C₁₈H₃₂O₂), (5Z, 8Z,11Z,14Z)-eicosa-5,8,11,14-tetraenoic[arachidonic ]acid (C₂₀H₃₂O₂), 12-hydroxy-(9Z)-octadeca-9-enoic[ricinoleic ]acid (C₁₈H₃₄O₃), (Z)-docosan-13-enoic[erucic]acid (C₂₂H₄₂O₃), (Z)-eicosan-9-enoic [gadoleic] acid (C₂₀H₃₈O₂), (7Z,10Z,13Z,16Z,19Z)-docosa-7,10,13,16,19-pentaenoic[clupanodonic] acid and mixtures thereof. Suitable fatty acids useful herein are ethylenically unsaturated conjugated or non-conjugated C₂₋₂₄-carboxylic acids, such as myristoleic, palmitoleic, arachidonic, erucic, gadoleic, clupanadonic, oleic, ricinoleic, linoleic, linolenic, licanic, nisinic acid and eleostearic acids and mixtures thereof, typically used in the form of mixtures of fatty acids derived from natural or synthetic oils.

When the marked coating composition (1) is an oxidatively drying coating composition, it typically comprises one or more oxidative driers. Suitable oxidative driers are known in the art. A drier is for example a metal salt which acts as a catalyst for the auto-oxidation reaction which is initiated on drying. Driers are also referred to as siccativating agents, siccative, dessicators, dessicators or dessicatives. Typical examples oxidative driers comprise without limitations compounds such as polyvalent salts containing cobalt, calcium, copper, zinc, iron, zirconium, manganese, barium, zinc, strontium, lithium, vanadium and potassium as the cation; and halides, nitrates, sulphates, carboxylates like acetates, ethylhexanoates, octanoates and naphtenates or acetoacetonates as the anions. Examples of driers may be found e.g. in WO 2011/098583 or in WO 2009/007988 and the thereto related documents.

According to one embodiment of the present invention, the marked coating composition (1) is a thermal drying composition. Thermal drying compositions consist of compositions of any type of aqueous compositions (also referred in the art as waterborne compositions) or solvent-based compositions which are dried by hot air, infrared or by a combination of hot air and infrared.

Typical examples of thermal drying compositions comprises components including without limitation resins such as polyester resins, polyether resins, vinyl chloride polymers and vinyl chloride based copolymers, nitrocellulose resins, cellulose acetobutyrate or acetopropionate resins, maleic resins, polyamides, polyolefins, polyurethane resins, functionalized polyurethane resins (e.g. carboxylated polyurethane resins), polyurethane alkyd resins, polyurethane-(meth)acrylate resins, urethane-(meth)acrylic resins, styrene (meth)acrylate resins or mixtures thereof. The term "(meth)acrylate" or "(meth)acrylic" in the context of the present invention refers to the acrylate as well as the corresponding methacrylate or refers to the acrylic as well as the corresponding methacrylic.

As used herein, the term "solvent-based compositions" refers to compositions whose liquid medium or carrier substantially consists of one or more organic solvents. Examples of such solvents include without limitation alcohols (e.g. methanol, ethanol, isopropanol, n-propanol, ethoxy propanol, n-butanol, sec-butanol, tert-butanol, isobutanol, 2-ethylhexyl-alcohol and mixtures thereof); polyols (e.g. glycerol, 1,5-pentanediol, 1,2,6-hexanetriol and mixtures thereof); esters (e.g. ethyl acetate, n-propyl acetate, n-butyl acetate and mixtures thereof); carbonates (e.g. dimethyl carbonate, diethylcarbonate, di-n-butylcarbonate, 1,2-ethylencarbonate, 1,2-propylenecarbonate, 1,3-propylencarbonate and mixtures thereof); aromatic solvents (e.g. toluene, xylene and mixtures thereof); ketones and ketone alcohols (e.g. acetone, methyl ethyl ketone, methyl isobutyl ketone, cyclohexanone, diacetone alcohol and mixtures thereof); amides (e.g. dimethylformamide, dimethyl-acetamide and mixtures thereof); aliphatic or cycloaliphatic hydrocarbons; chlorinated hydrocarbons (e.g. dichloromethane); nitrogen-containing heterocyclic compound (such as for example N-methyl-2-pyrrolidone, 1,3-dimethyl-2-imidazolidone and mixtures thereof); ethers (e.g. diethyl ether, tetrahydrofuran, dioxane and mixtures thereof); alkyl ethers of a polyhydric alcohol (e.g. 2-methoxyethanol, 1-methoxypropan-2-ol and mixtures thereof); alkylene glycols, alkylene thioglycols, polyalkylene glycols or polyalkylene thioglycols (e.g. ethylene glycol, polyethylene glycol (e.g. diethylene glycol, triethylene glycol, tetraethylene glycol), propylene glycol, polypropylene glycol (e.g. dipropylene glycol, tripropylene glycol), butylene glycol, thiodiglycol, hexylene glycol and mixtures thereof); nitriles (e.g. acetonitrile, propionitrile and mixtures thereof), and sulfur-containing compounds (e.g. dimethylsulfoxide, sulfolan and mixtures thereof). Preferably, the one or more organic solvents are selected from the group consisting of alcohols, esters and mixtures thereof.

According to one embodiment of the present invention, the marked coating composition (1) may consist of radiation curable compositions that may be cured by UV-visible light radiation (hereafter referred as UV-Vis-curable). Radiation curable compositions are known in the art and can be found in standard textbooks such as the series "Chemistry & Technology of UV & EB Formulation for Coatings, Inks & Paints", published in 7 volumes in 1997-1998 by John Wiley & Sons in association with SITA Technology Limited. According to one embodiment of the present invention, the marked coating composition (1) described herein consist of UV-Vis-curable compositions. UV-Vis curing advantageously leads to very fast curing processes and hence drastically decreases the preparation time of articles comprising said marked coating composition (1). Preferably the binder of the UV-Vis-curable compositions described herein is prepared from one or more compounds selected from the group consisting of radically curable compounds, cationically curable compounds and mixtures thereof. Cationically curable compounds are cured by cationic mechanisms consisting of the activation by energy of one or more photoinitiators which liberate cationic species, such as acids, which in turn initiate the polymerization so as to form the binder. Radically curable compounds are cured by free radical mechanisms consisting of the activation by energy of one or more photoinitiators which liberate free radicals which in turn initiate the polymerization so as to form the binder. Preferably, the binder of the UV-Vis-curable compositions described herein is prepared from one or more compounds selected from the group consisting of oligomeric (meth)acrylates, vinyl ethers, propenyl ethers, cyclic ethers such as epoxides, oxetanes, tetrahydrofuranes, lactones, cyclic thioethers, vinyl and propenyl thioethers, hydroxyl-containing compounds and mixtures thereof. More preferably, the binder of the UV-Vis-curable compositions described herein is prepared from one or more compounds selected from the group consisting of oligomeric (meth)acrylates, vinyl ethers, propenyl ethers, cyclic ethers such as epoxides, oxetanes, tetrahydrofuranes, lactones and mixtures thereof.

According to one embodiment of the present invention, the binder of the UV-Vis-curable compositions described herein is prepared from radically curable compounds oligomeric selected from (meth)acrylates, preferably selected from the group consisting of epoxy (meth)acrylates, (meth)acrylated oils, polyester (meth)acrylates, aliphatic or aromatic urethane (meth)acrylates, silicone (meth)acrylates, amino (meth)acrylates, acrylic (meth)acrylates and mixtures thereof. The term "(meth)acrylate" in the context of the present invention refers to the acrylate as well as the corresponding methacrylate. The binder of the UV-Vis-curable compositions described herein may be prepared with additional vinyl ethers and/or monomeric acrylates such as for example trimethylolpropane triacrylate (TMPTA), pentaerytritol triacrylate (PTA), tripropyleneglycoldiacrylate (TPGDA), dipropyleneglycoldiacrylate (DPGDA), hexanediol diacrylate (HDDA) and their polyethoxylated equivalents such as for example polyethoxylated trimethylolpropane triacrylate, polyethoxylated pentaerythritol triacrylate, polyethoxylated tripropyleneglycol diacrylate, polyethoxylated dipropyleneglycol diacrylate and polyethoxylated hexanediol diacrylate.

According to one embodiment of the present invention, the binder of the W-Vis-curable compositions described herein is prepared from cationically curable compounds selected from the group consisting of vinyl ethers, propenyl ethers, cyclic ethers such as epoxides, oxetanes, tetrahydrofuranes, lactones, cyclic thioethers, vinyl and propenyl thioethers, hydroxyl-containing compounds and mixtures thereof, preferably cationically curable compounds selected from the group consisting of vinyl ethers, propenyl ethers, cyclic ethers such as epoxides, oxetanes, tetrahydrofuranes, lactones and mixtures thereof. Typical examples of epoxides include without limitation glycidyl ethers, β-methyl glycidyl ethers of aliphatic or cycloaliphatic diols or polyols, glycidyl ethers of diphenols and polyphenols, glycidyl esters of polyhydric phenols, 1,4-butanediol diglycidyl ethers of phenolformalhedhyde novolak, resorcinol diglycidyl ethers, alkyl glycidyl ethers, glycidyl ethers comprising copolymers of acrylic esters (e.g. styrene-glycidyl methacrylate or methyl methacrylate-glycidyl acrylate), polyfunctional liquid and solid novolak glycidyl ethers resins, polyglycidyl ethers and poly(β-methylglycidyl) ethers, poly(N-glycidyl) compounds, poly(S-glycidyl) compounds, epoxy resins in which the glycidyl groups or β-methyl glycidyl groups are bonded to hetero atoms of different types, glycidyl esters of carboxylic acids and polycarboxylic acids, limonene monoxide, epoxidized soybean oil, bisphenol-A and bisphenol-F epoxy resins. Examples of suitable epoxides are disclosed in EP-B 2 125 713. Suitable examples of aromatic, aliphatic or cycloaliphatic vinyl ethers include without limitation compounds having at least one, preferably at least two, vinyl ether groups in the molecule. Examples of vinyl ethers include without limitation triethylene glycol divinyl ether, 1,4-cyclohexanedimethanol divinyl ether, 4-hydroxybutyl vinyl ether, propenyl ether of propylene carbonate, dodecyl vinyl ether, tert-butyl vinyl ether, tert-amyl vinyl ether, cyclohexyl vinyl ether, 2-ethylhexyl vinyl ether, ethylene glycol monovinyl ether, butanediol monovinyl ether, hexanediol monovinyl ether, 1,4-cyclohexanedimethanol monovinyl ether, diethylene glycol monovinyl ether, ethylene glycol divinyl ether, ethylene glycol butylvinyl ether, butane-1,4-diol divinyl ether, hexanediol divinyl ether, diethylene glycol divinyl ether, triethylene glycol divinyl ether, triethylene glycol methylvinyl ether, tetraethylene glycol divinyl ether, pluriol-E-200 divinyl ether, polytetrahydrofuran divinyl ether-290, trimethylolpropane trivinyl ether, dipropylene glycol divinyl ether, octadecyl vinyl ether, (4-cyclohexyl-methyleneoxyethene)-glutaric acid methyl ester and (4-butoxyethene)-iso-phthalic acid ester. Examples of hydroxy-containing compounds include without limitation polyester polyols such as for example polycaprolactones or polyester adipate polyols, glycols and polyether polyols, castor oil, hydroxy-functional vinyl and acrylic resins, cellulose esters, such as cellulose acetate butyrate, and phenoxy resins. Further examples of suitable cationically curable compounds are disclosed in EP-B 2 125 713 and EP-B 0 119 425.

Alternatively, the binder of the UV-Vis-curable compositions described herein is a hybrid binder and may be prepared from a mixture of radically curable compounds and cationically curable compounds such as those described herein.

UV-Vis curing of a monomer, oligomer or prepolymer may require the presence of one or more photoinitiators and may be performed in a number of ways. As known by those skilled in the art, the one or more photoinitiators are selected according to their absorption spectra and are selected to fit with the emission spectra of the radiation source. Depending on the monomers, oligomers or prepolymers used to prepare the binder comprised in the UV-Vis-curable compositions described herein, different photoinitiators might be used. Suitable examples of free radical photoinitiators are known to those skilled in the art and include without limitation acetophenones, benzophenones, alpha-aminoketones, alpha-hydroxyketones, phosphine oxides and phosphine oxide derivatives and benzyldimethyl ketals. Suitable examples of cationic photoinitiators are known to those skilled in the art and include without limitation onium salts such as organic iodonium salts (e.g. diaryl iodoinium salts), oxonium (e.g. triaryloxonium salts) and sulfonium salts (e.g. triarylsulphonium salts). Other examples of useful photoinitiators can be found in standard textbooks such as "Chemistry & Technology of UV & EB Formulation for Coatings, Inks & Paints", Volume III, "Photoinitiators for Free Radical Cationic and Anionic Polymerization", 2nd edition, by J. V. Crivello & K. Dietliker, edited by G. Bradley and published in 1998 by John Wiley & Sons in association with SITA Technology Limited. It may also be advantageous to include a sensitizer in conjunction with the one or more photoinitiators in order to achieve efficient curing. Typical examples of suitable photosensitizers include without limitation isopropyl-thioxanthone (ITX), 1-chloro-2-propoxy-thioxanthone (CPTX), 2-chloro-thioxanthone (CTX) and 2,4-diethyl-thioxanthone (DETX) and mixtures thereof. The one or more photoinitiators comprised in the UV-Vis-curable compositions are preferably present in an amount of 0.1-20 wt.-%, more preferably 1-15 wt.-%, based on the total weight of the UV-Vis-curable compositions.

The marked coating composition (1) described herein may further comprise one or more additives including without limitation compounds and materials which are used for adjusting physical, rheological and chemical parameters of the composition such as the viscosity (e.g. solvents and surfactants), the consistency (e.g. anti-settling agents, fillers and plasticizers), the foaming properties (e.g. antifoaming agents), the lubricating properties (waxes), UV stability (photosensitizers and photostabilizers) and adhesion properties, etc. Additives described herein may be present in the optically variable compositions disclosed herein in amounts and in forms known in the art, including in the form of so-called nano-materials where at least one of the dimensions of the particles is in the range of 1-1000 nm.

As used herein, the solvent of the marked coating composition (1), in particular the solvent of the solvent-borne composition consists of one or more organic solvents. Examples of such solvents include without limitation alcohols (e.g. methanol, ethanol, isopropanol, n-propanol, ethoxy propanol, n-butanol, sec-butanol, tert-butanol, isobutanol, 2-ethylhexyl-alcohol and mixtures thereof); polyols (e.g. glycerol, 1,5-pentanediol, 1,2,6-hexanetriol and mixtures thereof); esters (e.g. ethyl acetate, n-propyl acetate, n-butyl acetate and mixtures thereof); carbonates (e.g. dimethyl carbonate, diethylcarbonate, di-n-butylcarbonate, 1,2-ethylencarbonate, 1,2-propylenecarbonate, 1,3-propylencarbonate and mixtures thereof); aromatic solvents (e.g. toluene, xylene and mixtures thereof); ketones and ketone alcohols (e.g. acetone, methyl ethyl ketone, methyl isobutyl ketone, cyclohexanone, diacetone alcohol and mixtures thereof); amides (e.g. dimethylformamide, dimethyl-acetamide and mixtures thereof); aliphatic or cycloaliphatic hydrocarbons; chlorinated hydrocarbons (e.g. dichloromethane); nitrogen-containing heterocyclic compound (e.g. N-methyl-2-pyrrolidone, 1,3-dimethyl-2-imidazolidone and mixtures thereof); ethers (e.g. diethyl ether, tetrahydrofuran, dioxane and mixtures thereof); alkyl ethers of a polyhydric alcohol (e.g. 2-methoxyethanol, 1-methoxypropan-2-ol and mixtures thereof); alkylene glycols, alkylene thioglycols, polyalkylene glycols or polyalkylene thioglycols (e.g. ethylene glycol, polyethylene glycol (e.g. diethylene glycol, triethylene glycol, tetraethylene glycol), propylene glycol, polypropylene glycol (e.g. dipropylene glycol, tripropylene glycol), butylene glycol, thiodiglycol, hexylene glycol and mixtures thereof); nitriles (e.g. acetonitrile, propionitrile and mixtures thereof), and sulfur-containing compounds (e.g. dimethylsulfoxide, sulfolan and mixtures thereof). Preferably, the one or more organic solvents are selected from the group consisting of alcohols, esters and mixtures thereof.

Alternatively, the marked coating composition (1) may be a dual-cure composition i.e. a composition which combines for instance thermal drying and radiation curing mechanisms. Typically, such compositions are similar to radiation curing compositions but include a volatile part constituted by water or by solvent. These volatile constituents are evaporated first using hot air or IR driers, and UV drying is then completing the hardening process.

The marked coating composition (1) may particularly be a staining ink, and in some embodiments it may be especially a staining ink of the type used in connection with staining of banknotes or other value documents in case of unauthorized access thereto, e.g. in automated teller machines (ATM), IBNS equipments (Intelligent Banknote Neutralization Systems) or similar equipment.

The marked coating composition (1) may comprise two or more different marked coating composition components (5) such as those described herein.

In other embodiments, the marked coating composition (1) may be applied on a substrate typically by a printing method preferably selected from offset, flexographic, gravure, intaglio, inkjet, letterpress, screen printing and combinations thereof; or alternatively the marked coating composition (1) may be applied by a method preferably selected from the group consisting of brushing, roll-coating, spin coating, knife coating, casting, pouring, spraying and combinations thereof.

In other embodiments the marked coating composition (1) is applied to substrates, e.g. papers such as banknotes, other value documents, textiles or leather, or other substrates the marking of which may be of interest, intentionally in order to enable their subsequent authentication via the marking. The marked coating compositions of the present invention may then optionally be cured after their application to a substrate, e.g. by physical drying (evaporation of solvent), UV-curing, electron beam curing, heat-set, oxy-polymerization, by combinations thereof, or by other curing mechanisms. If the marked coating composition (1) used for the present invention is a UV-curable ink composition, the marker (3) may be linked covalently to the ink oligomeric or polymeric component (2) only after the application of the marked ink (1) on the substrate, e.g. by a printing method, e.g. during the UV-curing of the ink.

As the marker moiety (3a) is covalently bound to the respective coating composition component moiety (2a) to form a marked coating composition component (5), it will not be extractable from the marked coating composition (1) by conventional chemical treatments like using solvents and the like, and accordingly the marking will be improved over conventional markings in view of tamper resistance. Particularly, by using the marked coating composition component(5), i.e. an oligomeric or a polymeric taggant, the present invention prevents the undesirable marker removal from the coated or printed substrate by extraction or washing processes. Such a resistance to extraction and washing processes is required for security inks, in particular for staining inks that may be subjected to removal attempts after robbery.

In the terms of the present invention, the marked non-extractable component (5) is considered to be non-extractable if it fulfills one of the following criteria (A) and (B) described below.

Criterion (A): The marked non-extractable component (5) is considered to be non-extractable if it shows a solubility (at 25°C) of less than 0.1 mg per ml of solvent, preferably less than 0.05 mg per ml of solvent, more preferably less than 0.03 mg per ml of solvent or even less than 0.01 mg per ml of solvent. Preferably, the marked coating composition component (5) is non-extractable in at least the following solvents
(A1) each of water, methanol, ethanol, ethyl acetate, acetone and toluene,
   more preferably in
(A2) each of water, methanol, ethanol, ethyl acetate, dimethylformamide, acetone, chloroform, trichloroethylene, turpentine, xylene, toluene and white spirit (a petroleum distillate also known as "mineral spirits" in the US),
   and even more preferably in
(A3) each of the following solvents:
   water,
   aqueous (1 mol/l) sodium hypochlorite solution,
   methanol,
   ethanol,
   ethyl acetate,
   dimethylformamide,
   acetone,
   chloroform,
   trichloroethylene,
   perchloroethylene,
   turpentine,
   xylene,
   toluene,
   white spirit (a petroleum distillate also known as "mineral spirits" in the US),
   polyethylene glycol,
   aqueous (1 mol/l) acetic acid,
   aqueous (1 mol/l) hydrochloric acid,
   aqueous (1 mol/l) sulfuric acid,
   aqueous (1 mol/l) sodium hydroxide, and
   aqueous (1 mol/l) ammonia.

The criterion (B) will be defined further below.

Due to the resistance of the present compositions to extraction and washing processes, conventional authentication procedures relying on such chemical treatments for extracting the marker for the purpose of its authentication will no longer be useful for authenticating marking compositions according to the present invention.

The present invention therefore further provides a method of authenticating the marked coating composition (1) described herein and being applied to a substrate, which method comprises the steps of
(S100) collecting a sample of the composition (1) from the substrate to obtain a collected sample;
(S200) submitting the collected sample to thermally induced chemical fragmentation conditions to obtain chemical fragmentation products derived from the unit formed of the at least one marker moiety (3a) and the covalent linking group (4) covalently bonded to the oligomeric or polymeric moiety (2a);
(S300) analyzing the chemical products of the chemical sample fragmentation; and
(S400) authenticating the composition (1) by comparing these chemical products to one or more reference substances.

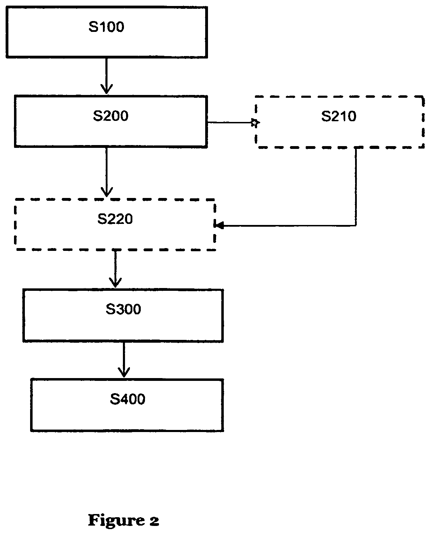

Figure 2 illustrates in the form of a flow diagram the principal steps of the present method of authenticating a marked coating composition of Figure 1 being applied to a substrate, such as a banknote.

In Figure 2, step (S100) stands for collecting a sample of the composition (1) (e.g. ink) from the substrate to obtain a collected sample.

Step (S200) stands for submitting the collected sample to thermally induced chemical fragmentation conditions to obtain chemical fragmentation products derived from the unit formed of the at least one marker moiety (3a) and the covalent linking group (4) covalently bonded to the oligomeric or polymeric moiety (2a);

The optional step (S210) stands for chemically modifying the marker (3) and/or other chemical products of the thermally induced chemical fragmentation during step (S200).

The optional step (S220) stands for accumulating the marker (3) and/or the chemical products obtained in the chemical fragmentation (S200) and/or modification (S210) in an accumulation means before step (S300).

Steps (S300) and (S400) stand for the measures indicated above.

In the first step (S100) a sample of the marked coating composition is collected from a substrate, e.g. by a scalpel or other tools, preferable by tools being suitable for extracting minimal amounts of the marked coating composition without (substantially) damaging or destroying the substrate, e.g. the banknote.

Then in the second step (S200) the collected sample is chemically fragmented by submitting it to thermally induced chemical fragmentation conditions. The chemical fragmentation preferably may yield to moieties derived from the oligomeric or polymeric coating composition component moiety (2a), the marked coating composition component (5), the marker moiety (3a) and/or the additional coating composition components (6).

The method for tagging (marking) the oligomeric or polymeric ink component (2) relies on generally used processes for the synthesis of varnishes, resins or other ink components. For instance, the marker (3) may be typically covalently bound to the binder, resin or varnish component, through e.g. a polyaddition, or a polycondensation reaction, for instance typically a ester condensation or a transesterification. Ester condensation or transesterification typically involve reacting together polyalcohols, polyacids or anhydrides, unsaturated carboxylic acids, and optionally diisocyanates, so as to obtain a tacky, not solidifying resin.

Under the thermally induced chemical fragmentation conditions, the marker (3) is released in a process which is the reverse process to the process of covalently bonding the marker (3) to the ink component (2). However, instead of the marker (3) itself, alternatively also a characteristic derivative or fragment of the marker may be released as a result of the chemical fragmentation step (S200).

The thermally induced chemical fragmentation process allows for selectively identifying markers (3) that have been grafted on one of the ink components (2). The markers are thus not extractable with conventional washing methods, e.g. as those commonly used by thieves breaking into ATMs, in the case of staining inks.

According to preferred embodiments of the invention, the thermally induced chemical fragmentation is performed by a pyrolysis treatment. Most preferably the pyrolysis treatment is done in the pyrolysis unit of a combined PY-GC-MS apparatus. Or alternatively, the pyrolysis unit is directly coupled to a mass spectrometer. The pyrolysis treatment is typically performed at a temperature in the range of 300-800°C, preferably 300-600°C, more preferably 400-600°C, and still more preferably 450-570°C. The latter range has been used for the examples described below. Typically, the pyrolysis treatment lasts for a few seconds (e.g. flash pyrolysis or Curie point pyrolysis) up to a few minutes, e.g. typically for 2 min. (e.g. furnace pyrolysis).

In some embodiments the marker concentration is selected such (preferable concentrations were already provided above) that the marked ink component (5) does not modify the ink or the coating composition physical characteristics, and, at the same time, such that the marker remains detectable by forensic methods, in particular by GC-MS methods. The minimal concentration of the marker is dependent on the detection limit of the used forensic analytical method or equipment, in particular on the lowest detection limit of the Mass Spectrometer Detector.

For this reason, in the present invention, the term "non-extractable", as an alternative to the definition provided above, preferably means that if a specified sample is excised from a substrate submitted to chemical attacks used for extraction attempts and comprising the marked coating composition (1), the marker moiety (3a) or the chemical products resulting form the chemical fragmentation of the marked coating composition component (5) can still be detected and authenticated by the method of the present invention. This, in turn, means that these structured cannot be detected in the extraction liquid used in an extraction test which is referred to herein as Criterion B. This extraction test is as follows.

Criterion (B): In the present invention, the preferable *non-extractability* of component (5) in the terms defined as criterion (B) is determined as follows. The marked coating composition component (5) is considered non-extractable by a given solvent if it passes the following test:
i) Tests samples of the substrate carrying the marked coating composition, e.g. a staining ink are immersed (and left standing) at room temperature (25°C) for 24 hours in the selected solvent. The amount of solvent used is 1 ml per 100 µg of marked coating composition component (5) contained in the coating. The test sample is then rinsed with the same amount of organic solvent as used for the test, or the same amount of water, if water or a diluted aqueous solution had been used, followed by drying.
ii) A 100 µg sample is excised from the dried sample obtained as described here before (i.e. from the test sample of the substrate carrying the marked composition which has been subjected to extraction, rinsing and drying) is then subjected to combined PY-GC-MS analysis under the following conditions The dried sample is then subjected to combined PY-GC- MS analysis (using a EA-CG-02, GC Agilent 6890 series fitted with a pyrolysis module, a Double-Shot Pyrolyser PY-20201D from Frontier Lab with an autosampler AS-1020E, and coupled with a MS spectrometer Agilent 5973) by conducting pyrolysis for 2 minutes at various temperatures between 400°C and 570°, depending on the samples, and analyzing the products by GC-MS.

The detection limit was about 25 ppm in the total ion current (TIC) mode and about 11 ppm in the selected ion monitoring (SIM) mode of the MS analyzer. The ppm is based on the total amount of sample submitted to the PY-GC-MS analysis).

If, after having subjected the test sample to the above extraction procedure, the test samples still allows to detect the marked coating composition component (5), specifically the marker moiety (3a) thereof, the marked coating composition component (5) is considered non-extractable by the solvent used.

Preferably, the present marked coating composition component (5) is non-extractable under the above conditions in at least the following solvents
(B1) each of each of water, methanol, ethanol, ethyl acetate, acetone and toluene;
   more preferably in
(B2) each of water, methanol, ethanol, ethyl acetate, dimethylformamide, acetone, chloroform, trichloroethylene, turpentine, xylene, toluene and white spirit (a petroleum distillate also known as "mineral spirits" in the US);
   and even more preferably in
(B3) each of the following solvents:
   water,
   aqueous (1 mol/l) sodium hypochlorite solution,
   methanol,
   ethanol,
   ethyl acetate,
   dimethylformamide,
   acetone,
   chloroform,
   trichloroethylene,
   perchloroethylene,
   turpentine,
   xylene,
   toluene,
   white spirit (a petroleum distillate also known as "mineral spirits" in the US),
   polyethylene glycol,
   aqueous (1 mol/l) acetic acid,
   aqueous (1 mol/l) hydrochloric acid,
   aqueous (1 mol/l) sulfuric acid,
   aqueous (1 mol/l) sodium hydroxide, and
   aqueous (1 mol/l) ammonia.

The present marked non-extractable component (5) fulfills at least one of the present criteria (A1) and (B1), preferably both (A1) and (B1). It is further preferred that it fulfills at least one of the present criteria (A2) and (B2), preferably both, and even further preferred it fulfills at least one of the present criteria (A3) and (B3), preferably both.

According to some embodiments of the present invention, the chemical products of the chemical fragmentation step (S200) are then analyzed for determining the marker (3), the marker moiety (3a) or the chemical products resulting form the chemical fragmentation of the marked coating composition component (5) in step (S300) without any further prior physical or chemical treatment beyond the fragmentation step (S200).

However, alternatively, e.g. when process of Fig. 2 is used for forensic purposes, the chemical products of the thermally induced chemical fragmentations may also be chemically modified before the analysis step (S300) in an optional chemical derivatization step (S210), in particular during the pyrolysis step (S200). For instance, if the marker gives a weak analytical response, e.g. a weak, not easily identified signal in the GC spectrum, e.g. a signal not easily distinguishable from the apparatus noise, the marker may be chemically modified to a derivative with a stronger analytical response. The chemical modification of the marker is performed on the sampled ink (1) as a part of the identification process of Fig. 2. Such process are known in the art and have been described e.g. the Handbook of Derivatives for Chromatography, 2nd edition, 1993, Edt Karl Blau & John M Halket, John Wiley & Sons, or in Journal of Analytical and Applied Pyrolysis, 61 (2001), 3-34.

Further in addition or alternatively, when the marker provides only a weak analytical response, the analytical apparatus may optionally also comprise a trapping device. The trapping device may consist in an accumulation means, in which the marker (3) and chemical products of the thermally induced chemical fragmentation or of the chemical derivatization are accumulated in a Step S220 before being injected in the GC-MS apparatus for the subsequent analysis step (S300). Or alternatively the chemical products of the thermally induced chemical fragmentation or of the chemical derivatization are accumulated in a Step S220 on the CG column head

When a signal of the marker is enhanced, e.g. by chemical modification to a derivative with a stronger analytical response, or by insertion of a trapping device in the analytical apparatus, the concentration of the marker in the marked ink may be reduced even below the lower mass concentration limit provided above, i.e. below 0,001% respectively 0,01%.

Finally, once the marker (3) has been determined in analysis step S300, in step S400 the authentication of the marked coating composition via its marker is completed by comparing the chemical products, i.e. the determined marker or in the case of multiple different markers the determined markers, to one or more reference substance(s).

Then in a further step (S300), the chemical products of the sample chemical fragmentation are analyzed, preferably by using gas chromatography (GC) for separating different products of the sample fragmentation and a mass spectrometer (MS) for identifying one or more of these products. More preferably, a combined pyrolysis-gas chromatography-mass spectrometer (PY-GC-MS) is used to perform the steps of submitting said collected sample of marked coating composition (1) to thermally induced chemical fragmentation conditions and of analyzing the products of the sample fragmentation.

Accordingly, the method of authentication according to the third aspect of the present invention enables the effective and efficient authentication of marked coating compositions (1) according to the first aspect of the present invention respectively the markers thereof, when applied on a substrate according to the second aspect of the invention, where conventional authentication methods, which typically rely on a chemical extraction of the marker would fail. Particularly, the method allows for the authentication without substantially damaging or even destroying the substrate to which the marked coating composition is applied. Also, unlike conventional methods, the authentication method according to the present invention only needs minimal amounts of a marked coating composition as a sample to be authenticated.

### Examples

For the purpose of further illustration of the present invention, in the following two examples of results achieved with the authentication method described herein are provided:

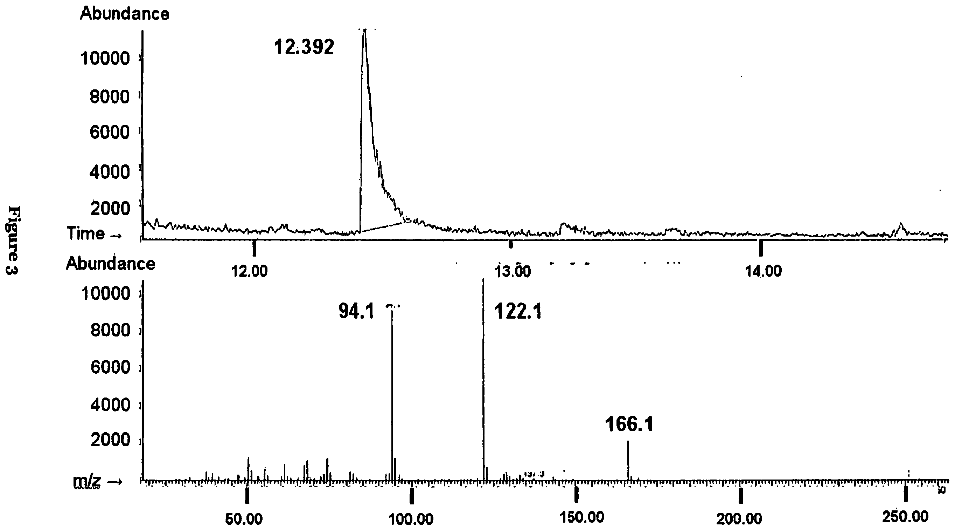

**Figure 3** shows exemplary results in the form of a GC-chromatogram and the MS spectrum of a marker as such, i.e. the reference substance according to step (S400) of Figure 2, namely a GC-chromatogram and a MS-spectrum of the marker 4-fluoro phthalic anhydride (FPA) used for the marking (tagging) of a ink (as described in the example section below). The GC-chromatogram shows the characteristic retention time of the FPA. The MS spectrum shows the characteristic mass peaks pattern of the FPA, with the molecular peak of FPA at 166 and a peak at 122 corresponding to the loss of a carbon dioxide fragment.

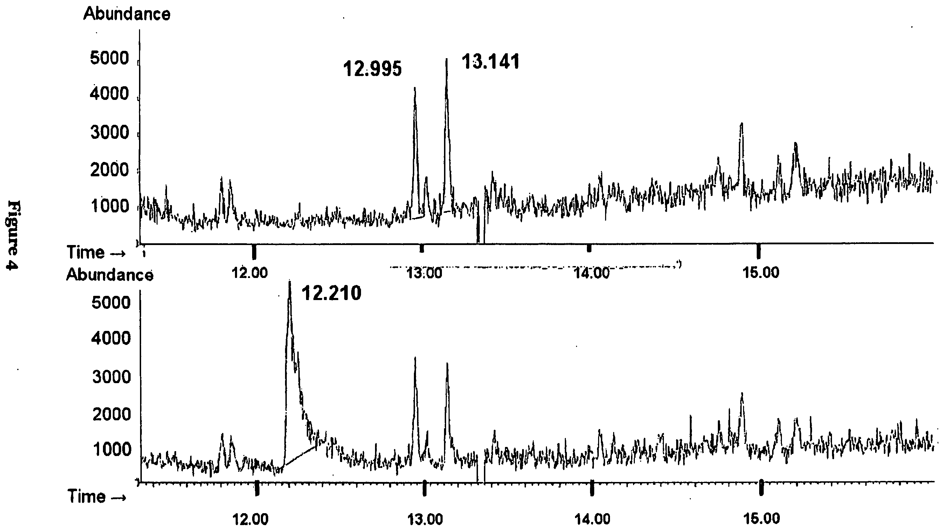

**Figure 4** shows as further exemplary results the single ion chromatogram of an un-marked ink (upper chromatogram) and the corresponding single ion chromatogram of a FPA-tagged ink (lower chromatogram). In the lower chromatogram, the characteristic peak of FPA at the retention time of 12.210 is visible indicating the presence of the taggant in the corresponding ink.

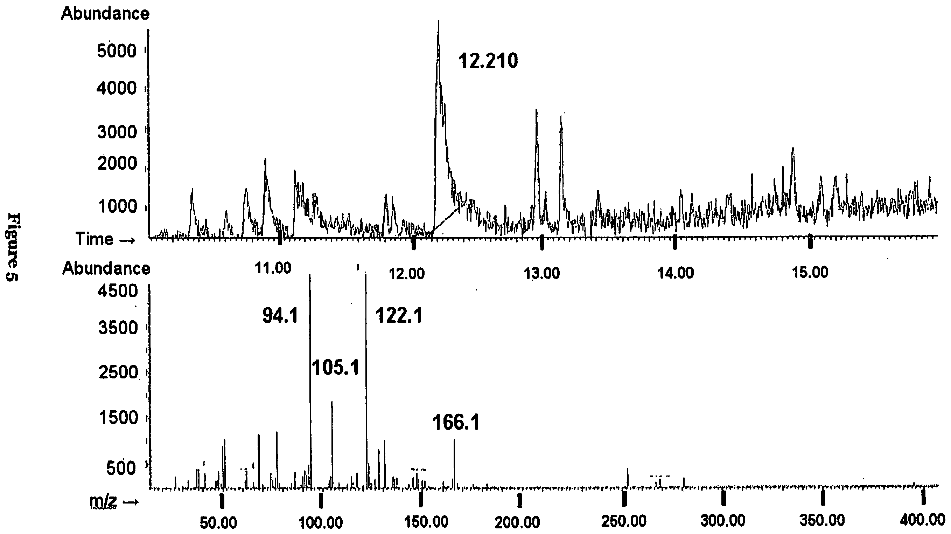

**Figure 5** shows as further exemplary results the corresponding single ion chromatogram of a FPA-tagged ink (same chromatogram as in Figure 4 lower chromatogram). The characteristic peak of FPA at the retention time of 12.210 is visible indicating the presence of the taggant in the corresponding ink. The MS spectrum of the characteristic peak of FPA at the retention time of 12.210 shows the characteristic mass peaks pattern of the FPA, with the molecular peak of FPA at 166 and a peak at 122, as seen in the MS-spectrum of the reference substance in Figure 3.

### General procedure for sampling of tagged (marked) ink.

All analyses were conducted with the minimum quantity of marked ink that the lowest detection limit of the GC-MS apparatus permitted.

Micro-destructive techniques as used e.g. in the analysis of artistic or archeological samples were used. Gentle micro-sampling with a small scalpel blade allowed excising the ink sample in such a way that the excised area was not discernible to the naked eye. The size of the ink fragments obtained with this technique was comprised in a range around 100 µg of substance, corresponding to the quantity needed for the detection of the taggant. The samples were placed directly in the pyrolysis unit of the PY-GC-MS apparatus without any further treatment.

### Instrumentation: PY-GC-MS apparatus:

The instrument used for the analysis of the ink samples was a EA-CG-02, GC Agilent 6890 series fitted with a pyrolysis module, a *Double-Shot Pyrolyser PY*-*2020iD* from Frontier Lab with an autosampler AS-1020E, and coupled with a MS spectrometer Agilent 5973. The pyrolysis unit was a Double-Shot Pyrolyser system PY-2020iD from Frontier Lab.

The pyrolysis treatments were performed for 2 minutes at various temperatures between 400°C and 570° depending on the samples.

The samples were then analyzed on the GC-MS apparatus.

### a) Comparative Example (see Figure 3):

### Preparation of an intaglio varnish mixed with the taggant (taggant mixed but not covalently bound)

In order to prove the covalent bounding of the taggant, a comparative example was prepared wherein the taggant was *mixed,* but *not reacted,* with the other varnish components:
Synthesis of the un-tagged ink component and mixing with the taggant 4-fluoro phtalic anhydride (FPA):
   1. A mixture of a fatty acid (63 parts), glycerin (12 parts), a polyol (11 parts)and phthalic anyhydride (13.6 parts) was heated under inert atmosphere to reflux for 5 hours. The mixture was evaporated under vacuum to eliminate water, yielding a clear varnish V-1.
   2. A di-isocyanate (9 parts) was added to the mixture (48 parts) of the clear varnish V-1 in N-undecane. A zirconium catalyst (0.1 part) was added and the mixture was heated to 125°C for 2 hours yielding a pale yellow oil (V-1A).

The taggant (marker) 4-fluoro phtalic anhydride (0.6 part) was mixed with this oil yielding the varnish V-2 (V-2 is the un-tagged ink component mixed with taggant FPA).

### b) Example (see Figure 4):

### Tagging of an intaglio varnish V-4 with 4-fluoro phtalic anhydride (FPA) (taggant)

Synthesis of a tagged ink component:
1. A mixture of a fatty acid (63 parts) (same fatty acid as for V1) glycerin (12 parts), a polyol (11 parts) (same polyol as for V1), phthalic anyhydride (13 parts) and 4-fluoro phthalic anhydride FPA (0.6 part) was heated under inert atmosphere to reflux for 5 hours. The mixture was evaporated under vacuum to eliminate water, yielding a clear varnish V-3.
2. A di-isocyanate (9 parts) (same di-isocyanate as for V1) was added to the clear varnish V-3 (48 parts) in N-undecane. A zirconium catalyst (0.1 part) was added and the mixture was heated to 125°C for 2 hours yielding a pale yellow varnish V-4 (V-4 is the tagged ink component, the taggant is covalently bound).

### c) GPC Analysis of the Varnishes V-2 and V-4.

The varnishes V-2 and V-4 were analyzed by GPC:
Each varnish was partitioned in 2 fractions, F1 and F2. The average molecular weight of the fraction was calculated based on usual method using GPC polystyrene standards.

The fraction F1 corresponds to the polymeric compound (average molecular weight Mw around ∼63'000 Da); the fraction F2 corresponds to compounds with molecular weight below 500 Da.

### d) PY-GC-MS Analyses of partitioned Varnishes V-2 and V-4

The partitioned varnishes V-2 and V-4 were analyzed with PY-GC-MS: the fractions F1 and F2 of each varnish V-2 and V-4 were pyrolysed and analyzed by GC-MS. The presence of the characteristic peak of the taggant FPA was checked in the MS-spectrograms of the various fractions

| **Detection of taggant in GC-MS spectrum** | F1 | F2 |
|---|---|---|
| Varnish V-2 (un-tagged varnish mixed with FPA) | Negative | Positive |
| Varnish V-4 (tagged varnish) | Positive | Negative |

### e) Preparation of a marked Intaglio Ink Composition I-1 comprising the Varnish V-4:

| **Component** | **Parts by weight (g)** |
|---|---|
| Tagged ink Component V-4 | 13.5 |
| Binder | 28 |
| Wax | 7.3 |
| Filler | 38.7 |
| Pigment | 8 |
| Drier | 2.5 |
| Solvent | 2 |

A comparative example of an untagged ink I-2 was prepared by substituting the ink component V-4 by the ink component V-1A in the above formulation.

### f) Printing with the Intaglio Inks I-1 and I-2.

The inks I-1 and I-2 were printed on substrate (banknote) by intaglio printing as known in the art.

### g) Sampling and Analysis

A sample of each the printed ink I-1 and I-2 were scratched off with a scalpel and analyzed by PY-GC-MS. The presence of the characteristic peak of the taggant FPA was checked in the MS-spectrogram: the taggant characteristic peak was found in the ink sample I-1 but not in the ink I-2.

## Claims

1. A composition, which is a marked coating composition (1), comprising
(i) a marked non-extractable component (5) comprising an oligomeric or polymeric moiety (2a) and at least one marker moiety (3a) bonded to the moiety (2a) via a covalent linking group (4); or
(ii) an oligomeric or polymeric component (2) and at least one marker (3) comprising a marker moiety (3a) and a group capable of forming a linking group (4) to obtain the component (5) upon curing the composition (1);
wherein the amount of the marker moiety (3a), based on the composition (1), is 0.001-1 wt.-%; and
wherein the moiety derived from the marker (3) and comprising the marker moiety (3a) and the covalent linking group (4) is selected from
R-(CRH)*ₘ*-(CR=CH)*ₙ*-(C=C)*ₚ*-R (I) 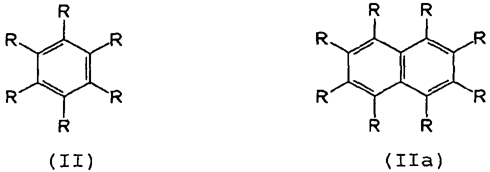 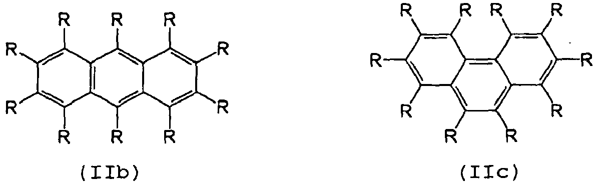 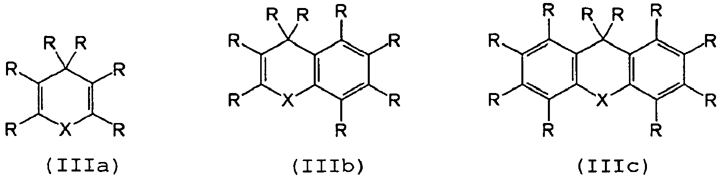 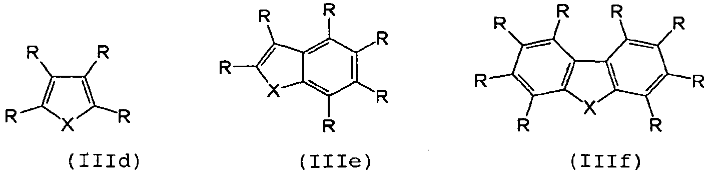
wherein
R each independently is selected from H, D (deuterium), T (tritium), C₁₋₁₈-alkyl, C₁₋₁₈-alkenyl, C₁₋₁₈-alkynyl, C₃₋₁₂-cycloalkyl, C₃₋₁₂-cycloalkenyl, C₁₋₁₂-heterocycloalkyl, C₇₋₁₂-aralkyl, *Hal,* CH₂*Hal,* CH*Hal*₂, *CHal₃,* CN, CXXR², OR², SR², NR²R³, -N=N-Ar, =N-NR²Ar, SiR⁴R⁵R⁶, X-P(X)(XR²)(XR³), P(X)(XR²)(XR³), SOR², SO₂R², phenyl substituted with 1-3 groups R² different from H, or a 5-8-membered heteroaromatic group having at least on of O, S, N, NH and N(C₁₋₁₈-alkyl) in the ring;
or two adjacent groups R separated by 2 or 3 carbon atoms together form a moiety selected from 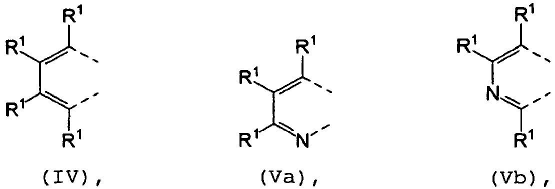 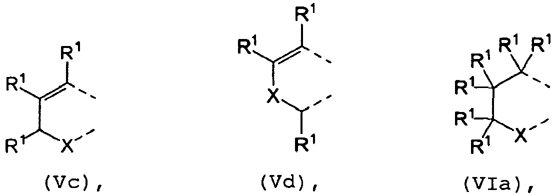 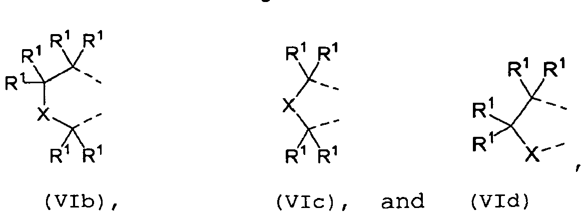
R¹ each independently is selected from H, D (deuterium), T (tritium), C₁₋₁₈-alkyl, *Hal,* CH₂*Hal*, CH*Hal*₂, C*Hal*₃, CN, CXXR², OR², SR², NR²R³, SiR⁴R⁵R⁶, P(X) (XR²) (XR³), X-P(X)(XR²)(XR³), SOR² and SO₂R²; or in formulae (VIa)-(VId) two geminal groups R¹, together with the carbon atom to which they are bound, each independently are C=O, C=NR² or C=S;
R², R³ each independently is selected from H, D (deuterium), C₁₋₁₈-alkyl, C₁₋₁₈-alkenyl, C₁₋₁₈-alkynyl, C₃₋₁₂-cycloalkyl, C₃₋₁₂-cycloalkenyl, C₁₋₁₂-heterocycloalkyl, C₇₋₁₂-aralkyl, CH₂*Hal*; CH*Hal*₂, *CHal*₃, SiR⁴R⁵R⁶, phenyl and a 5-8-membered heteroaromatic group having at least on of O, S, N, NH and N(C₁₋₁₈-alkyl) in the ring;
R⁴, R⁵ and R⁶ each independently are selected from C₁₋₁₈-alkyl, O(C₁₋₁₈-alkyl) and N(C₁₋₁₈-alkyl);
*Hal* is F, Cl, Br or I;
Ar is an aromatic group;
X is O, NH, N(C₁₋₁₈-alkyl) or S; and
*m*, *n, p* each are a number in the range of 0-20; and
(i) at least one, preferably one to four, and more preferably one or two, group(s) R is/are a covalent linking group (4) linking the marker moiety (3a) to the oligomeric or polymeric moiety (2a), and each independently is selected from a bond, *(3a)*-COO-*(2a)*, *(3a)-CONR²-(2a), (3a)*-O-CO-O-*(2a)*, *(3a)*-O-CO-NR²-*(2a)*, *(3a)*-NH-CO-NR²-*(2a)*, *(3a)*-O-*(2a)*, *(3a)*-S-*(2a)* or *(3a)*-NR²-*(2a)*, wherein *(3a)* and *(2a)* indicate the positions of the marker moiety (3a) and the oligomeric or polymeric moiety (2a), respectively; and
(ii) at least one R or R² which is not a covalent linking group (4) is not H; and
wherein the marked coating composition (1) is selected from
- an oxidatively drying composition comprising an oligomer or a polymer comprising unsaturated fatty acid residues, saturated fatty acids residues or mixtures thereof; or
a resin selected from alkyd resins, vinyl polymers, polyurethane resins, hyperbranched resins, rosin-modified maleic resins, terpene resins nitrocellulose resins, polyolefins, polyamides, acrylic resins and mixtures thereof;
- a thermal drying composition comprising a resins selected from polyester resins, polyether resins, vinyl chloride polymers and vinyl chloride based copolymers, nitrocellulose resins, cellulose acetobutyrate or acetopropionate resins, maleic resins, polyamides, polyolefins, polyurethane resins, functionalized polyurethane resins, polyurethane alkyd resins, polyurethane-(meth)acrylate resins, urethane-(meth)acrylic resins, styrene (meth)acrylate resins and mixtures thereof;
- a UV-VIS-curable composition comprising one or more compounds selected from oligomeric (meth)acrylates, vinyl ethers, propenyl ethers, cyclic ethers, oxetanes, tetrahydrofuranes, lactones, cyclic thioethers, vinyl and propenyl thioethers, hydroxyl-containing compounds and mixtures thereof; and
- a combination thereof.

2. The composition of claim 1, wherein one marker moiety (3a) is present.

3. The composition of claim 1, wherein two or more different marker moieties (3a) are present, and preferably in a defined molecular ratio.

4. The composition of any of the preceding claims, wherein the moiety (2a) is a resin component or a varnish component.

5. The composition of any of the preceding claims, which further comprises one or more additional components (6) selected from pigments, dyestuffs, luminescent compounds, oils, resins, solvents, reactive diluents, plasticizers, waxes, fillers, driers, anti-oxidants, surfactants, defoaming agents, catalysts, UV-stabilizers and photoinitiators.

6. The composition of any of the preceding claims, which is a marked ink.

7. The composition of claim 6, which is a staining ink.

8. The composition of any of the preceding claims, which comprises two or more different marked non-extractable components (5).

9. An article, comprising a substrate to which a composition (1) of any of the preceding claims and comprising a marked non-extractable component (5) is applied.

10. The article of claim 9, wherein the substrate is a banknote or a value document, and the composition (1) is printed on the substrate.

11. A method for preparing the article of claim 9 or 10, comprising applying the composition (1) of any of claims 1-8 on a substrate by a printing method, selected from offset, flexographic, gravure, intaglio, inkjet, letterpress, screen printing and combinations thereof, or by a method selected from brushing, roll-coating, spin coating, knife coating, casting, pouring, spraying and combinations thereof.

12. A method of authenticating a composition (1) of any of claims 1-8 present in an article of claim 9 or 10, comprising the steps of
(S100) collecting a sample of the composition (1) from the substrate to obtain a collected sample;
(S200) submitting the collected sample to thermally induced chemical fragmentation conditions to obtain chemical fragmentation products derived from the unit formed of the at least one marker moiety (3a) and the covalent linking group (4) covalently bonded to the oligomeric or polymeric moiety (2a);
(S300) analyzing the chemical products of the chemical sample fragmentation; and
(S400) authenticating the composition (1) by comparing these chemical products to one or more reference substances.

13. The method of claim 12, wherein step (S200) comprises pyrolysis of the collected sample at a temperature of 300-600°C, and preferably 450-570°C.

14. The method of claim 12 or 13, wherein the chemical products of the chemical fragmentation are subjected to (S210) chemical modification during step (S200).

15. The method of any of claims 12-14, which further comprises a step (S220) of accumulating the marker (3) and/or the chemical products obtained in the chemical fragmentation (S200) and/or modification (S210) in an accumulation means before step (S300).

16. The method of any of claims 12-15, wherein in step (S300) gas chromatography (GC) is used for separating different products of the sample fragmentation, and a mass spectrometry (MS) is used for identifying one or more of these products.

17. The method of claim 16, wherein a combined pyrolysis-gas chromatography-mass spectrometer, PY-GC-MS, is used to perform the steps (S200) and (S300).

## Patentansprüche

1. Zusammensetzung, die eine markierte Beschichtungszusammensetzung (1) ist, umfassend
(i) eine markierte nicht extrahierbare Komponente (5), die einen oligomeren oder polymeren Rest (2a) und mindestens einen Markierungsrest (3a) umfasst, der über eine kovalente Verbindungsgruppe (4) an den Rest (2a) gebunden ist; oder
(ii) eine oligomere oder polymere Komponente (2) und mindestens eine Markierung (3), umfassend einen Markierungsrest (3a) und eine Gruppe, die eine Verbindungsgruppe (4) bilden kann, so dass die Komponente (5) beim Härten der Zusammensetzung (1) erhalten wird;
wobei die Menge des Markierungsrestes (3a), bezogen auf die Zusammensetzung (1) 0,001-1 Gew.-% ausmacht, und
wobei der Rest, der von der Markierung (3) abgeleitet ist und den Markierungrest (3a) und die kovalente Verbindungsgruppe (4) umfasst, ausgewählt ist aus
R-(CRH)ₘ-(CR=CH)ₙ-(C-C)ₚ-R (_{T}) 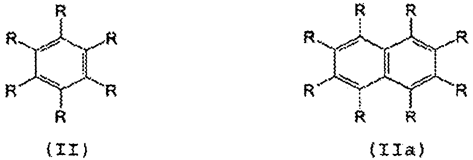 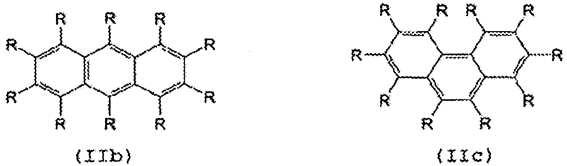 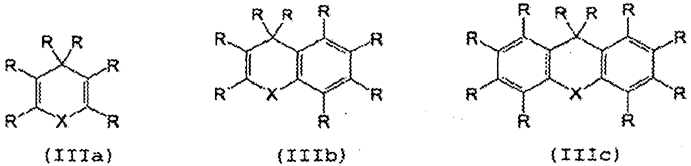 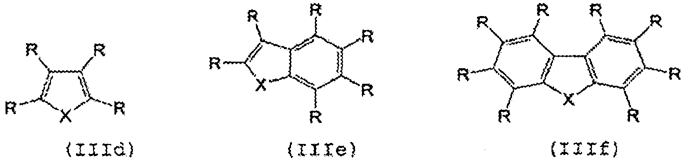
wobei
R jeweils unabhängig ausgewählt ist aus H, D (Deuterium), T (Tritium), C₁₋₁₈-Alkyl, C₁₋₁₈-Alkenyl, C₁₋₁₈-Alkinyl, C₃₋₁₂-Cycloalkyl, C₃₋₁₂-Cycloalkenyl, C₁₋₁₂-Heterocycloalkyl, C₇₋₁₂-Aralkyl, *Hal*, CH₂*Hal*, CH*Hal*_{2,} *CHal*₃*,* CN, CXXR², OR², SR², NR²R³, -N=N-Ar, =N-NR²Ar, SiR⁴R⁵R⁶, X-P(X)(XR²) (XR³), P(X) (XR²) (XR³), SOR²_{,} SO₂R², Phenyl, das substituiert ist mit 1-3 Gruppen R², die von H verschieden sind, oder einer 5-8-gliedrigen heteroaromatischen Gruppe mit mindestens einem von 0, S, N, NH und N (C₁₋₁₈-Alkyl) im Ring;
oder zwei benachbarte Gruppen R, die durch 2 oder 3 Kohlenstoffatome getrennt sind, zusammen einen Rest bilden, ausgewählt aus 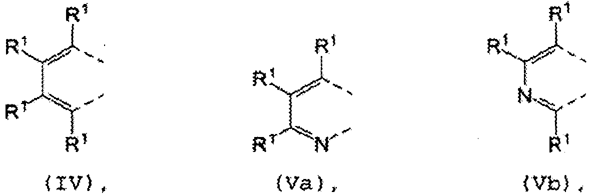 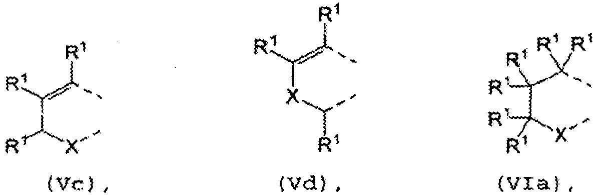 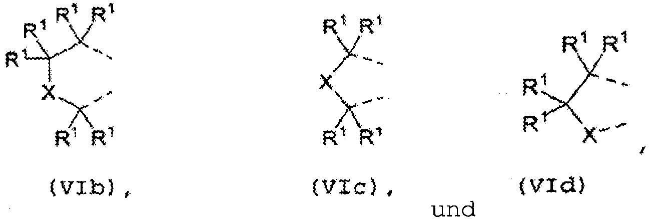
R¹ jeweils unabhängig ausgewählt ist aus H, D (Deuterium), T (Tritium), C₁₋₁₈-Alkyl, *Hal,* CH₂*Hal*, CH*Hal*₂, *CHal*₃*,* CN, CXXR², OR², SR², NR²R³, SiR⁴R⁵R⁶, P(X) (XR²) (XR³), X-P(X) (XR²) (XR³), SOR² und SO₂R²;
oder in den Formeln (VIa) - (VId) zwei geminale Gruppen R¹ zusammen mit dem Kohlenstoffatom, an das sie gebunden sind, jeweils unabhängig voneinander für C=O, C=NR², oder C=S stehen;
R² R³ jeweils unabhängig ausgewählt sind aus H, D (Deuterium), C₁₋₁₈-Alkyl, C₁₋₁₈-Alkenyl, C₁₋₁₈-Alkinyl, C₃₋₁₂-Cycloalkyl, C₃₋₁₂-Cycloalkenyl, C₁₋₁₂-Heterocycloalkyl, C₇₋₁₂-Aralkyl, CH₂*Hal*, CH*Hal*₂, *CHal*₃*,* SiR⁴R⁵R⁶, Phenyl und einer 5 bis
8-gliedrigen heteroaromatischen Gruppe mit mindestens einem von O, S, N, NH und N(C₁₋₁₈-Alkyl) im Ring;
R⁴, R⁵ und R⁶ 3 jeweils unabhängig ausgewählt sind aus C₁₋₁₈-Alkyl , O (C₁₋₁₈-Alkyl) und N (C₁₋₁₈-Alkyl) ;
*Hal* für F, Cl, Br oder I steht;
Ar eine aromatische Gruppe ist;
X für O, NH, N(C₁₋₁₈-Alkyl) oder S steht; und
*m*, *n, p* jeweils für eine Zahl im Bereich von 0-20 steht; und
(i) mindestens eine, vorzugsweise eine bis vier, und vorzugsweise eine oder zwei Gruppe(n) R eine kovalente Verbindungsgruppe (4) ist/sind, die den Markierungsrest (3a) mit dem oligomeren oder polymeren Rest (2a) verbindet und jeweils unabhängig ausgewählt ist aus einer Bindung, *(3a)* -COO- *(2a)*, (3a) -CONR²- *(2a)*, *(3a)* -O-CO-O-*(2a), (3a)-*O-CO-NR²*- (2a), (3a)*-NH-CO-NR²- *(2a),* (3a)-O-*(2a)*, *(3a)-*S-*(2a)* oder *(3a)*-NR²- *(2a),* wobei *(3a)* und *(2a)* die Positionen des Markierungsrests (3a) bzw. des oligomeren oder polymeren Rests (2a) anzeigen; und
(ii) mindestens ein Rest R oder R², der keine kovalente Verbindungsgruppe (4) ist, nicht H ist; und
wobei die markierte Beschichtungs-Zusammensetzung (1) ausgewählt ist aus
- einer oxidativ trocknenden Zusammensetzung, umfassend
ein Oligomer oder ein Polymer, umfassend ungesättigte Fettsäurereste, gesättigte Fettsäurereste oder Gemische davon; oder
ein Harz, ausgewählt aus Alkydharzen, Vinylpolymeren, Polyurethanharzen, hyperverzweigten Harzen, harzmodifizierten Maleinatharzen, Terpenharzen, Nitrocelluloseharzen, Polyolefinen, Polyamiden, Acrylharzen und Gemischen davon;
- einer wärmetrocknenden Zusammensetzung, umfassend Harze, ausgewählt aus Polyesterharzen, Polyetherharzen, Vinylchloridpolymeren und Copolymeren auf Vinylchloridbasis, Nitrocelluloseharzen, Celluloseacetobutyrat oder Acetopropionatharzen, Maleinatharzen, Polyamiden, Polyolefinen, Polyurethanharzen, funktionalisierten Polyurethanharzen, Polyurethanalkydharzen, Polyurethan(meth)acrylatharzen, Urethan(meth)-acrylharzen, Styrol(meth)acrylatharzen und Gemischen davon;
- einer UV-VIS-härtbaren Zusammensetzung, umfassend eine oder mehr Verbindungen, ausgewählt aus oligomeren (Meth)acrylaten, Vinylethern, Propenylethern, cyclischen Ethern, Oxetanen, Tetrahydrofuranen, Lactonen, cyclischen Thioethern, Vinyl- und Propenylthioethern, Hydroxyl-enthaltenden Verbindungen und Gemischen davon; und
- einer Kombination davon.

2. Zusammensetzung nach Anspruch 1, wobei ein Markierungsrest (3a) zugegen ist.

3. Zusammensetzung nach Anspruch 1, wobei zwei oder mehr verschiedene Markierungsreste (3a), und vorzugsweise in einem definierten molekularen Verhältnis, zugegen sind.

4. Zusammensetzung nach einem der vorhergehenden Ansprüche, worin der Rest (2a) eine Harzkomponente oder eine Lackkomponente ist.

5. Zusammensetzung nach einem der vorhergehenden Ansprüche, die zudem eine oder mehr zusätzliche Komponenten (6), ausgewählt aus Pigmenten, Farbstoffen, lumineszierenden Verbindungen, Ölen, Harzen, Lösungsmitteln, reaktiven Verdünnungsmitteln, Weichmachern, Wachsen, Füllstoffen, Trocknungsmitteln, Antioxidantien, oberflächenaktiven Mitteln, Entschäumungsmitteln, Katalysatoren, UV-Stabilisatoren und Photoinitiatoren, umfasst.

6. Zusammensetzung nach einem der vorhergehenden Ansprüche, die eine markierte Tinte ist.

7. Zusammensetzung nach Anspruch 6, die eine Einfärbetinte ist.

8. Zusammensetzung nach einem der vorhergehenden Ansprüche, die zwei oder mehr verschiedene markierte nicht-extrahierbaren Komponenten (5) umfasst.

9. Gegenstand, umfassend ein Substrat, auf das eine Zusammensetzung (1) nach einem der vorhergehenden Ansprüche und die eine markierte nicht-extrahierbare Komponente (5) umfasst, aufgebracht ist.

10. Gegenstand nach Anspruch 9, wobei das Substrat eine Banknote oder ein Wertdokument ist, und die Zusammensetzung (1) auf das Substrat gedruckt ist.

11. Verfahren zum Herstellen des Gegenstands nach Anspruch 9 oder 10, umfassend das Auftragen der Zusammensetzung (1) nach einem der Ansprüche 1 bis 8 auf ein Substrat durch ein Druckverfahren, ausgewählt aus Offset-, Flexographie-, Tiefdruck-, Intaglio-, Tintenstrahl-, Buchdruck-, Siebdruck-Verfahren und Kombinationen davon, oder durch ein Verfahren, ausgewählt aus Pinselauftrag, Walzbeschichten, Schleuderbeschichten, Rakelbeschichten, Guss, Gießen, Sprühen und Kombinationen davon.

12. Verfahren zum Authentifizieren einer Zusammensetzung (1) nach einem der Ansprüche 1 bis 8, die in einem Gegenstand nach Anspruch 9 oder 10 zugegen ist, umfassend die Schritte
(S100) Sammeln einer Probe der Zusammensetzung (1) aus dem Substrat, um eine gesammelte Probe zu erhalten;
(S200) Unterwerfen der gesammelten Probe thermisch induzierten chemischen Fragmentierungsbedingungen, so dass chemische Fragmentierungsprodukte erhalten werden, die aus der Einheit stammen, die aus dem mindestens einen Markierungsrest (3a) und der kovalenten Verbindungsgruppe (4), die kovalent an den oligomeren oder polymer Rest (2a) gebunden ist, gebildet werden;
(S300) Analysieren der chemischen Produkte der chemischen Probenfragmentierung; und
(S400) Authentifizieren der Zusammensetzung (1) durch Vergleich dieser chemischen Produkte mit einem oder mehr Referenzsubstanzen.

13. Verfahren nach Anspruch 12, wobei der Schritt (S200) Pyrolyse der gesammelten Probe bei einer Temperatur von 300-600°C und vorzugsweise 450-570°C umfasst.

14. Verfahren nach Anspruch 12 oder 13, wobei die chemischen Produkte der chemischen Fragmentierung (S210) chemischer Modifikation während des Schritts (S200) unterworfen werden.

15. Verfahren nach einem der Ansprüche 12 bis 14, das zudem einen Schritt (S220) Anreichern der Markierung (3) und/oder der chemischen Produkte, die in der chemischen Fragmentierung (S200) und/oder der Modifikation (S210) erhalten werden, in einer Anreicherungseinrichtung vor dem Schritt (S300).

16. Verfahren nach einem der Ansprüche 12 bis 15, wobei in Schritt (S300) Gaschromatographie (GC) zur Trennung verschiedener Produkte der Probenfragmentierung verwendet wird, und eine Massenspektrometrie (MS) zum Identifizieren von einem oder mehr dieser Produkte verwendet wird.

17. Verfahren nach Anspruch 16, wobei ein kombiniertes Pyrolyse-Gaschromatographie-Massenspektrometer, PY-GC-MS, zur Durchführung der Schritte (S200) und (S300) verwendet wird.

## Revendications

1. Composition, qui réside en une composition (1) de revêtement marquée, comprenant
(i) un composant (5) non extractible marqué comprenant un fragment (2a) oligomère ou polymère et au moins un fragment marqueur (3a) lié au fragment (2a) via un groupe (4) de liaison covalente ; ou
(ii) un composant (2) oligomère ou polymère et au moins un marqueur (3) comprenant un fragment marqueur (3a) et un groupe capable de former un groupe (4) de liaison pour obtenir le composant (5) lors du durcissement de la composition (1) ;
la quantité du fragment marqueur (3a), sur base de la composition (1), valant 0,001-1% en poids ; et
le fragment dérivé du marqueur (3) et comprenant le fragment marqueur (3a) et le groupe (4) de liaison covalente étant choisi parmi
R-(CRH)*ₘ*-(CR=CH)*ₙ*-(C≡C)*ₚ*-R (I) 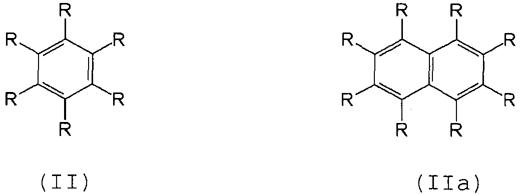 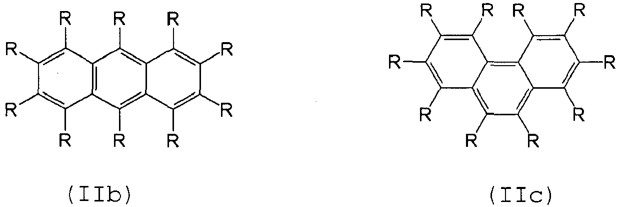 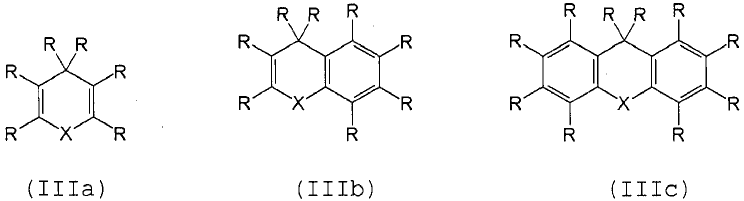 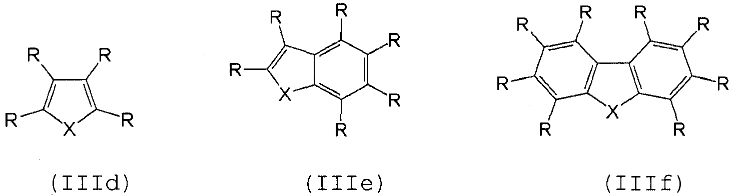
où
R est choisi à chaque fois indépendamment parmi H, D (deutérium), T (tritium), C₁₋₁₈-alkyle, C₁₋₁₈-alcényle, C₁₋₁₈-alcynyle, C₃₋₁₂-cycloalkyle, C₃₋₁₂-cycloalcényle, C₁₋₁₂-hétérocycloalkyle, C₇₋₁₂-aralkyle, Hal, CH₂Hal, CHHal₂, CHal₃, CN, CXXR² OR² SR² NR²R³, -N=N-Ar, =N-NR²Ar, SiR⁴R⁵R⁶, X-P(X) (XR²) (XR³), P (X) (XR²) (XR³), SOR², SO₂R², phényle substitué par 1-3 groupes R² différents de H, ou un groupe hétéroaromatique à 5-8 chaînons comportant au moins l'un parmi O, S, N, NH et N(C₁₋₁₈-alkyle) dans le cycle ;
ou deux groupes adjacents R séparés par 2 ou 3 atomes de carbone forment ensemble un fragment choisi parmi 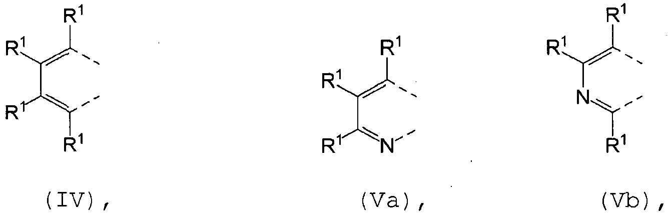 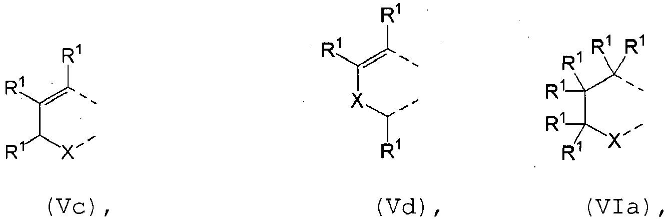 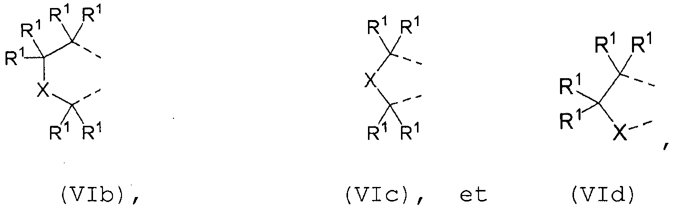
R¹ est choisi à chaque fois indépendamment parmi H, D (deutérium), T (tritium), C₁₋₁₈-alkyle, Hal, CH₂Hal, CHHal₂, CHal₃, CN, CXXR², OR², SR², NR²R³, SiR⁴R⁵R⁶, P(X)(XR²) (XR³), X-P(X)(XR²) (XR³), SOR² et SO₂R² ;
ou dans les formules (VIa)-(VId) deux groupes géminaux R¹, ensemble avec l'atome de carbone auquel ils sont liés, représentent chacun indépendamment C=O, C=NR² ou C=S ;
R² R³ sont choisis chacun indépendamment parmi H, D (deutérium), C₁₋₁₈-alkyle, C₁₋₁₈-alcényle, C₁₋₁₈-alcynyle, C₃₋₁₂-cycloalkyle, C₃₋₁₂-cycloalcényle, C₁₋₁₂-hétérocycloalkyle, C₇₋₁₂-aralkyle, CH₂Hal, CHHal₂, CHal₃, SiR⁴R⁵R⁶, phényle et un groupe hétéroaromatique à 5-8 chaînons comportant au moins un parmi O, S, N, NH et N(C₁₋₁₈-alkyle) dans le cycle ;
R⁴, R⁵ et R⁶ sont choisis chacun indépendamment parmi C₁₋₁₈-alkyle, O(C₁₋₁₈-alkyle) et N(C₁₋₁₈-alkyle) ;
*Hal* représente F, Cl, Br ou I ;
Ar représente un groupe aromatique ;
X représente 0, NH, N(C₁₋₁₈-alkyle) ou *S* ; et
*m, n, p* valent chacun un nombre dans la plage de 0-20 ; et
(i) au moins un, de préférence un à quatre et plus préférablement un ou deux groupe(s) R représente(nt) un groupe (4) de liaison covalente liant le fragment marqueur (3a) au fragment (2a) oligomère ou polymère et chacun est choisi indépendamment parmi une liaison, (3a) -COO- (2a), (3a) -CONR²- (2a), (3a) -O-CO-O-(2a), (3a)-O-CO-NR²-(2a), (3a) -NH-CO-NR²- (2a), (3a)-O-(2a), (3a)-S-(2a) ou (3a)-NR²-(2a), (3a) et (2a) indiquant respectivement les positions du fragment marqueur (3a) et du fragment (2a) oligomère ou polymère ; et
(ii) au moins un parmi R ou R² qui ne représente pas un groupe (4) de liaison covalente ne représente pas H ; et
la composition (1) de revêtement marquée étant choisie parmi
- une composition séchant par oxydation comprenant
un oligomère ou un polymère comprenant des résidus d'acides gras insaturés, des résidus d'acides gras saturés ou leurs mélanges ; ou
une résine choisie parmi les résines alkyde, les polymères vinyliques, les résines de polyuréthane, les résines hyperramifiées, les résines maléiques modifiées par rosine, les résines terpéniques, les résines de nitrocellulose, les polyoléfines, les polyamides, les résines acryliques et leurs mélanges ;
- une composition séchant thermiquement comprenant une résine choisie parmi les résines de polyester, les résines de polyéther, les polymères de chlorure de vinyle et les copolymères à base de chlorure de vinyle, les résines de nitrocellulose, les résines d'acétobutyrate ou d'acétopropionate de cellulose, les résines maléiques, les polyamides, les polyoléfines, les résines de polyuréthane, les résines de polyuréthane fonctionnalisé, les résines de polyuréthanealkyde, les résines de polyuréthane-(méth)acrylate, les résines d'uréthane-(méth)acryliques, les résines de styrène-(méth)acrylate et leurs mélanges ;
- une composition durcissable par UV-VIS comprenant un ou plusieurs composés choisis parmi les (méth)acrylates oligomères, les vinyléthers, les propényléthers, les éthers cycliques, les oxétanes, les tétrahydrofurannes, les lactones, les thioéthers cycliques, les vinylthioéthers et les propénylthioéthers, les composés contenant hydroxyle et leurs mélanges ; et
- une combinaison de celles-ci.

2. Composition selon la revendication 1, un fragment marqueur (3a) étant présent.

3. Composition selon la revendication 1, deux ou plus de deux fragments marqueurs (3a) différents étant présents et, de préférence, dans un rapport moléculaire défini.

4. Composition selon l'une quelconque des revendications précédentes, le fragment (2a) étant un composant de résine ou un composant de vernis.

5. Composition selon l'une quelconque des revendications précédentes, qui comprend en outre un ou plusieurs composants (6) supplémentaires choisis parmi des pigments, des colorants, des composés luminescents, des huiles, des résines, des solvants, des diluants réactifs, des plastifiants, des cires, des charges, des siccatifs, des antioxydants, des agents tensioactifs, des agents antimousse, des catalyseurs, des stabilisateurs des UV et des photo-initiateurs.

6. Composition selon l'une quelconque des revendications précédentes qui est une encre marquée.

7. Composition selon la revendication 6, qui est une encre de coloration.

8. Composition selon l'une quelconque des revendications précédentes, qui comprend deux ou plus de deux composants (5) non extractibles marqués différents.

9. Objet comprenant un substrat sur lequel une composition (1), selon l'une quelconque des revendications précédentes et comprenant un composant (5) non extractible marqué, est appliquée.

10. Objet selon la revendication 9, le substrat étant un billet de banque ou un document de valeur, et la composition (1) étant imprimée sur le substrat.

11. Procédé de préparation de l'objet selon la revendication 9 ou 10, comprenant l'application de la composition (1) selon l'une quelconque des revendications 1-8 sur un substrat par un procédé d'impression, choisi parmi l'impression offset, flexographique, par gravure, taille douce, par jet d'encre, typographique, sérigraphique et leurs combinaisons, ou par un procédé choisi parmi l'application au pinceau, l'enduction par rouleau, le dépôt à la tournette, l'enduction à la racle, le coulage, l'application au rideau, la pulvérisation et leurs combinaisons.

12. Procédé d'authentification d'une composition (1) selon l'une quelconque des revendications 1-8 présente dans un objet selon la revendication 9 ou 10, comprenant les étapes de
(S100) prélèvement d'un échantillon de la composition (1) du substrat pour obtenir un échantillon prélevé ;
(S200) soumission de l'échantillon prélevé à des conditions de fragmentation chimique induite thermiquement pour obtenir des produits de fragmentation chimique dérivés de l'unité formée du ledit au moins un fragment marqueur (3a) et du groupe (4) de liaison covalente lié de manière covalente au fragment (2a) oligomère ou polymère ;
(S300) analyse des produits chimiques de la fragmentation chimique de l'échantillon ; et
(S400) authentification de la composition (1) par comparaison de ces produits chimiques à une ou plusieurs substances de référence.

13. Procédé selon la revendication 12, l'étape (S200) comprenant la pyrolyse de l'échantillon prélevé à une température de 300-600°C et de préférence de 450-570°C.

14. Procédé selon la revendication 12 ou 13, les produits chimiques de la fragmentation chimique étant soumis à une modification chimique (S210) pendant l'étape (S200).

15. Procédé selon l'une quelconque des revendications 12-14, comprenant en outre une étape (S220) d'accumulation du marqueur (3) et/ou des produits chimiques obtenus dans la fragmentation chimique (S200) et/ou la modification (S210) dans un moyen d'accumulation avant l'étape (S300).

16. Procédé selon l'une quelconque des revendications 12-15, une chromatographie en phase gazeuse (CG) étant utilisée dans l'étape (S300) pour séparer différents produits de la fragmentation de l'échantillon et un spectromètre de masse (SM) étant utilisé pour identifier un ou plusieurs de ces produits.

17. Procédé selon la revendication 16, une pyrolysechromatographie en phase gazeuse-spectrométrie de masse combinée, PY-CG-SM étant utilisée pour réaliser les étapes (S200) et (S300).
